(19) **Europäisches Patentamt / European Patent Office / Office européen des brevets**

(11) **EP 3 399 836 B1**

(12) **EUROPEAN PATENT SPECIFICATION**

(45) Date of publication and mention
of the grant of the patent:
**03.06.2026 Bulletin 2026/23**

(21) Application number: **18169911.7**

(22) Date of filing: **27.04.2018**

(51) International Patent Classification (IPC):
***H05B 1/02*** *(2006.01)* ***A47J 37/06*** *(2006.01)*
***G08C 17/02*** *(2006.01)*

(52) Cooperative Patent Classification (CPC):
**H05B 1/0261; A47J 37/0629; G08C 17/00**

(54) **DIGITAL POWER SUPPLY WITH WIRELESS MONITORING AND CONTROL**

DIGITALE STROMVERSORGUNG MIT DRAHTLOSER ÜBERWACHUNG UND STEUERUNG

ALIMENTATION DE PUISSANCE NUMÉRIQUE AVEC SURVEILLANCE ET COMMANDE SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.05.2017 US 201715493696**

(43) Date of publication of application:
**07.11.2018 Bulletin 2018/45**

(73) Proprietor: **Weber-Stephen Products LLC
Palatine IL 60067 (US)**

(72) Inventors:
• **KNAPPENBERGER, Eric
Chicago, IL 60614 (US)**
• **ZULETA, Julio C.
Gilberts, IL 60136 (US)**
• **LERCH, Matthew
Chicago, IL 60625 (US)**
• **EMMERICH, Jeffery C.
Delavan, WI 53115 (US)**

(74) Representative: **FRKelly
Waterways House
Grand Canal Quay
Dublin D02 PD39 (IE)**

(56) References cited:
**EP-A1- 2 214 458      EP-A2- 0 804 049
GB-A- 2 067 857       GB-A- 2 339 348
US-A1- 2009 167 085   US-A1- 2016 196 739**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present inventions relate to a digital power supply for independently controlling two or more high-powered loads with reduced harmonic and flicker introduction. In a non-limiting embodiment, a digital power supply may be used in an electric grill to independently control two or more heating elements while reducing harmonics and flicker introduced to the power system. The digital power supply may transmit operational parameters and receive control signals wirelessly, from a remote device. Moreover, the digital power supply may include functionality for heating a heating element to a desired target temperature, and maintaining that temperature for a duration.

**Background of the Inventions**

There is an increasing desire for a power supply that can independently control two or more high-powered loads using an AC wall outlet while introducing a reduced amount of harmonics and/or flicker into the power grid. The urban population is increasing, and with it there is an increasing desire for high powered loads that can be plugged into an AC wall outlet. By way of example, urban dwellers live in apartment or condominium buildings where they would like to use a grill. Because of smoke, gas, or other concerns, use of typical charcoal or gas grills may not be permitted or desirable.

There are a number of available electric cooking devices, such as the George Foreman Plate Grill (and similar devices), Panini presses, electric griddles and the like. However, these prior art devices generally do not deliver variable power. Moreover, these prior art electric cooking devices typically cannot generate enough power to match a gas or electric grill.

Some prior art devices may use variable resistors in series with electric loads to control an amount of power delivered to the load. For example, as the resistance of a variable resistor increases, the variable resistor restricts power from being delivered to an electric load. The use of variable resistors to control power delivery to electric loads is well known. But variable resistors come with disadvantages. For example, disadvantages may include the introduction of harmonics onto the electrical system, which translates to electromagnetic emissions that can create interference and other unpredictable electromagnetic fields. Moreover, variable resistors may be inefficient because they burn a lot of power.

Other prior art devices may use a bi-metal thermometer which opens and closes to control power delivery. Disadvantages of using a bi-metal thermometer include the fact that it allows for less discrete (i.e., less precise) control over power delivered and is usually associated with a relatively long lag in response time. A long lag time causes a negative cooking experience because it leads to poor control over temperature. Moreover, a long lag time is disadvantageous because long on/off duty cycles are known to shorten the life span of a heating element

Some devices may use half-wave control techniques to deliver power. For example, U.S. Patent 6,772,475, titled "Heating Control System Which Minimizes AC Power Line Voltage Fluctuations," discloses half wave AC control devices to control delivery of AC current. This control method is associated with significant disadvantages because it delivers power only in stages, not in a continuous range from 0-100%. By contrast, embodiments of the present invention allow continuous variable power delivery.

Yet other prior art devices may include a digital control for limiting the in-rush of electric current when an electric load in turned on. For example, U.S. Patent 6,111,230, titled "Method and apparatus for supplying AC power while meeting the European flicker and harmonic requirements," describes a method for limiting the in-rush of current to a printing device when it is first turned on. However, the disclosed devices do not provide for independently controlling multiple electric loads, much less for reducing harmonic currents and flicker while independently controlling multiple loads.

Thus, there is a need for a digital power supply that can independently control two or more electric loads while introducing only reduced harmonic and flicker interference to the power system. Further, there is a need for embodiments in which one or more electric loads can be controlled wirelessly, with reduced harmonic and flicker interference. It would be advantageous for such wireless control to include a remote device which can monitor operational parameters and control the digital power supply wirelessly.

US 2009/167085 (Foneca Julia et al) discloses an electronic power control system which can be used with various input voltages. For example, it is known that input voltages may vary by geographic locations. The device disclosed by US 2009/167085 is an electronic power control system for electrical loads which may be subject to a plurality of different supply voltages or to substantial swings relative to a nominal supply voltage. The disclosure of US 2009/167085 seeks to provide a single cost-effective control system for an appliance which would allow the appliance to be used with any of the various power supplies.

GB 2 067 458 (Thorn Domestic Appliances LTD) is directed to a power system which reduced fluctuations in the line voltage caused by the grill heater. GB 2 067 458 discloses that a heater should be split into two separate heating elements, and that such two separate heating elements should be alternately energized so as to reduce fluctuations in line voltage.

EP 2 067 857 (Lutron Electronics Co) is directed to a microprocessor configuration for determining the status of a load. EP 2 067 857 discloses that the load may be a lighting load or a dimmer switch, and that it would be desirable for the microprocessor of the load control device to determine the stats of the load, without being dependent upon the voltage at the load terminal or the type of electrical load that is being controlled.

US 2016/196739 (Naber Christopher Nils et al) is directed to a wireless thermometer communicating with a cooktop for closed loop element control. The disclosed smart device contains a program permitting user data entry for selecting cooking programs and for processing receiving cooking environment data in accordance with a contained program. The smart device may then transmit control instruction to the cooking appliance to enable closed loop control thereof.

## Brief Summary of the Inventions

The invention is set out in the appended set of claims. The present disclosure provides a digital power supply as detailed in claim 1. Advantageous features are provided in dependent claims. The present inventions overcome many of the deficiencies of known power supplies and provide new features and advantages for devices such as electric grills. For example, embodiments of the present invention provide digital power controls that can deliver more precise amounts of power to electric loads. Moreover, embodiments of the present invention allow a plurality of electric loads to be controlled independently. Yet further embodiments of the present invention reduce the harmonic currents and flicker that may result from plugging a power supply into a wall outlet. Additional embodiments provide for the wireless control of electric loads while reducing harmonic and flicker interference.

In accordance with a preferred embodiment of the present invention, a digital power supply is provided, comprising: a first and second load connected respectively through a first and second triac to a voltage line; and a microprocessor in electronic communication with the first and second triac; wherein the microprocessor is configured to deliver discrete power levels to the first and second load by activating and deactivating the first and second triac, respectively. The digital power supply may include a wireless controller in electronic communication with the microprocessor. Moreover, the microprocessor may receive at least one desired target temperature. The desired target temperature may be received wirelessly, via the wireless controller, from a remote device. The desired target temperature may be received via a user input device in electronic communication with the microprocessor.

In embodiments of the invention, the microprocessor receives a first desired target temperature corresponding to the first load and a second desired target temperature corresponding to the second load. Furthermore, the digital power supply may comprise at least one thermocouple in electronic communication with the microprocessor. Optionally, a first thermocouple is positioned proximate to the first load and a second thermocouple is positioned proximate to the second load. The discrete power levels may be 0%, 50%, and 100%. Moreover, the microprocessor may be configured to simultaneously deliver 100% power to the first load until the first desired target temperature is reached and 100% power to the second load until the second desired target temperature is reached.

Other embodiments provide an electric grill having a digital power supply, comprising: at least one heating element connected through a triac to a voltage line; a microprocessor in electronic communication with the triac; wherein the microprocessor is configured to deliver discrete power levels to the heating element by activating or deactivating the triac; at least one temperature sensing device for measuring the temperature at a position in the electric grill, the temperature sensing device being in electronic communication with the microprocessor; and a band controller configured to receive a desired target temperature and determine an upper temperature band and a lower temperature band based on the desired target temperature. The discrete power levels may be 0%, 50%, and 100%.

Optionally, the microprocessor is adapted and configured to continuously monitor the temperature received from the temperature sensing device, and wherein the microprocessor is further adapted and configured to deliver 100% power to the heating element until the lower temperature band is reached. The microprocessor can be further adapted and configured to deliver 50% power to the heating element until the upper temperature band is reached, and wherein the microprocessor may deliver 50% power by alternately blocking and allowing a wave of ac current to pass to the heating element. The microprocessor can be further adapted and configured to deliver 0% power to the heating element when the upper temperature band is reached. Moreover, the band controller may be adapted and configured to dynamically lower the temperature bands for a lower desired target temperature and raise the temperature bands for a higher desired target temperature.

For example, a desired target temperature of 394K (250F) may have a lower temperature band of 269K (25F) below the desired target temperature and an upper temperature band equal to the desired target temperature. A desired target temperature between 394K (250F) and 478K (400F) may have a lower temperature band of 10F below the desired target temperature and an upper temperature band of 10F above the desired target temperature. A desired target temperature above 478K (400F) may have a lower temperature band equal to the desired target temperature and an upper temperature band of 264K (15F) above the desired target temperature.

Additional embodiments provide a wireless electric grill system, comprising: an electric grill having at least one heating element connected through a triac to a voltage line; a microprocessor in electronic communication with the triac; wherein the microprocessor is configured to deliver discrete power levels to the heating element by activating or deactivating the triac; at least one thermocouple for measuring the temperature at a position in the electric grill, the thermocouple being in electronic communication with the microprocessor; and a wireless controller in electronic communication with the microprocessor. The system may further include a remote device having a screen and a user input device, the remote device being in wireless communication with the electric grill via the electric grill's wireless controller. In some embodiments, the remote device displays, to a user, a menu of food profiles and receives from the user, via the user input device, a selected food profile.

In some embodiments, the remote device determines a target temperature associated with the selected food profile and wirelessly communicates the target temperature to the electric grill. The microprocessor is adapted and configured to deliver a first discrete power level to the heating element until the lower temperature band is reached. The microprocessor is further adapted and configured to deliver a second discrete power level to the heating element once the lower temperature band is reached. The microprocessor can be further adapted and configured to deliver a third discrete power level to the heating element once the upper temperature band is exceeded. For example, in some embodiments, the first discrete power level is 100%, the second discrete power level is 50%, and the third discrete power level is 0%. In some embodiments the discrete power level of 50% is achieve by allowing every second wave of an AC current to pass to the heating element.

Moreover, the remote device can be configured to send an "off" signal to the electric grill in response to a user input via the user input device, and the microprocessor is configured to deliver 0% power in response to the "off" signal. Optionally, the microprocessor is adapted and configured to calculate an estimated ambient temperature based on a temperature at the thermocouple, and wherein the microprocessor is further adapted and configured to compare the estimated ambient temperature to the target temperature. Embodiments of the invention may further comprise a latch relay configured in parallel with the triac and in communication with the microprocessor. The microprocessor may be adapted and configured to deliver 100% power to the heating element by activating the latch relay and deactivating the triac.

Accordingly, it is an object of the present invention to provide a digital power supply that provides precise power control, may independently control multiple loads, and may reduce harmonic currents and flicker introduced by the power supply into a wall outlet.

Another object of the invention is to provide an improved power supply, including but not limited to one that may be used with an electric grill.

It is an additional object of the invention to provide a digital power supply that can be used in an electric grill to provide independent control over two or more heating elements.

It is an additional object of the invention to provide a digital power supply that introduces fewer harmonic currents into a wall outlet.

It is an additional object of the invention to provide a digital power supply that introduces less flicker into a wall outlet.

It is an additional object of the invention to provide a digital power supply for use in an electric grill that complies with standard limits and/or regulations on harmonic currents and flicker.

It is an additional object of the invention to provide a digital power supply for use in an electric grill to deliver variable power to two or more heating elements.

It is an additional object of the invention to provide a digital power supply that uses phase cutting techniques to deliver variable power.

It is an additional object of the invention to provide a digital power supply that delivers discrete power levels.

It is an additional object of the invention to improve a heating element's life span by providing short duty cycles.

It is an additional object of the invention to provide a technique for achieving and maintaining a desired target temperature.

It is an additional object of the invention to provide a power supply in an electric grill with wireless capabilities for remotely monitoring operational parameters, as well as controlling power levels wirelessly.

## Inventors' Definition of Terms

The following terms which may be used in the various claims or specification of this patent are intended to have their broadest meaning consistent with the requirement of law:
As used herein, a "power array" is defined to be an array of values, each value representing a percentage $(0.0 \leq x \leq 1.0)$ of power delivery in one wave cycle. Exemplary power arrays are described as having four cells, but it will be understood that arrays of other sizes are possible.

As used herein, a "phase angle array" is defined to be an array of values, each value representing the phase angle "cut" in one wave cycle. Exemplary phase angle arrays have four cells, but it will be understood that arrays of other sizes are possible.

As used herein, a "timing pattern" is defined to be a pattern of "on" and "off" signals that create phase-controlled AC wave forms.

Where alternative meanings are possible, in either the specifications of claims, the broadest meaning is intended consistent with the understanding of a person of ordinary skill in the art. All of the words used in the claims are intended to the use in the normal, customary usage of grammar, the trade and the English language.

## Brief Description of the Drawings

The stated and unstated features, objects and advantages of the present invention (sometimes used in the singular, but not excluding the plural) will become apparent from the following description and drawings, wherein the like reference numerals represent like elements in the various views and in which:

Figure 1A is a front view of an exemplary grill of the present invention.
Figure 1B is a top schematic view of a cooking surface of a representative grill showing representative internal components.
Figure 2A is a schematic of an exemplary embodiment of a circuit, including a digital power supply circuit of the present invention.
Figure 2B is a schematic of an exemplary embodiment of a circuit, including a digital power supply circuit and a wireless controller of the present invention.
Figure 3A is an exemplary wave form with a 90 degree cut of the present invention.
Figure 3B is an exemplary wave form with a 90 degree cut of the present invention.
Figure 3C shows harmonic currents plotted against standard limits showing harmonic currents by a 1150W element.
Figure 4A is an exemplary cut wave form followed by an "on" wave of the present invention.
Figure 4B is an exemplary cut wave form followed by an "on" wave of the present invention.
Figure 4C shows harmonic currents plotted against standard limits showing harmonic currents by a 1150W element.
Figure 5A is an exemplary cut wave form followed by an "off" wave of the present invention.
Figure 5B is an exemplary cut wave form followed by an "off" wave of the present invention.
Figure 5C shows harmonic currents plotted against standard limits showing harmonic currents by a 1150W element.
Figure 6 is a flow chart of an exemplary microprocessor configuration of the present invention.
Figure 7 is an exemplary algorithm for populating a power array of the present invention.
Figure 8 shows exemplary power delivered to two heating units over a period of time of the present invention.
Figure 9 shows exemplary power delivered to n-number of heating units of the present invention.
Figure 10 is a flow chart of exemplary inputs and outputs to a microprocessor of the present invention.
Figure 11 shows standard (IEC 61000-3-3) limits for flicker.
Figure 12 shows exemplary wave forms for the first load, second load, and the combined power usage.
Figure 13 is an exemplary graph showing estimated ambient temperatures inside a grill box based on measurements taken near a grill's heating elements.
Figure 14A is a graph showing exemplary temperature fluctuations of an electric grill operating in a medium temperature range.
Figure 14B is a graph showing exemplary temperature fluctuations of an electric grill operating in a low temperature range.
Figure 14C is a graph showing exemplary temperature fluctuations of an electric grill operating at a high temperature range.
Figure 15 is an exemplary schematic of an electric grill in wireless communication with a remote device.

## Detailed Description of the Preferred Embodiments

Set forth below is a description of what is currently believed to be the preferred embodiments or best representative examples of the inventions claimed. Future and present representative or modifications to the embodiments and preferred embodiments are contemplated. Any alterations or modifications which make insubstantial changes in function, purpose, structure or result are intended to be covered by the claims of this patent. The present inventions may be used on and/or part of electric grills with current protection circuitry as discussed in the co-pending patent application entitled "Electric Grill With Current Protection Circuitry" filed by Applicants and having application number 15/200,687, and also the co-pending patent application entitled "Wireless Control And Monitoring For Electric Grill With Current Protection Circuitry," filed on the same day as this application, both of which are assigned to Weber-Stephen Products LLC.

The present inventions generally include a digital power supply that can provide independent power control, and continuous variable power, for two or more electrical loads. Embodiments of the present inventions may reduce the amount of harmonics and/or flicker introduced into a power system. A person of ordinary skill in the art will recognize that the digital power supply may be used to supply any electrical load or combinations of loads, including heaters, motors, and the like. In a preferred embodiment described herein, exemplary loads are heating elements found in an electric grill.

Electric grills are a suitable application for a digital power supply with independent load control because a user may wish to have higher heat on one side of an electric grill and lower heat on the other side of the grill. Such an arrangement allows a user to simultaneously grill various foods requiring different temperatures, or to use indirect grilling methods. Examples of indirect grilling methods include placing foods on one side of a cooking surface while heating another side, thereby avoiding direct contact between the food and the heat source. A further benefit of variable power is that it allows a user to input a power setting and achieve targeted temperatures. This makes it possible to cook at low temperatures for prolonged periods of time.

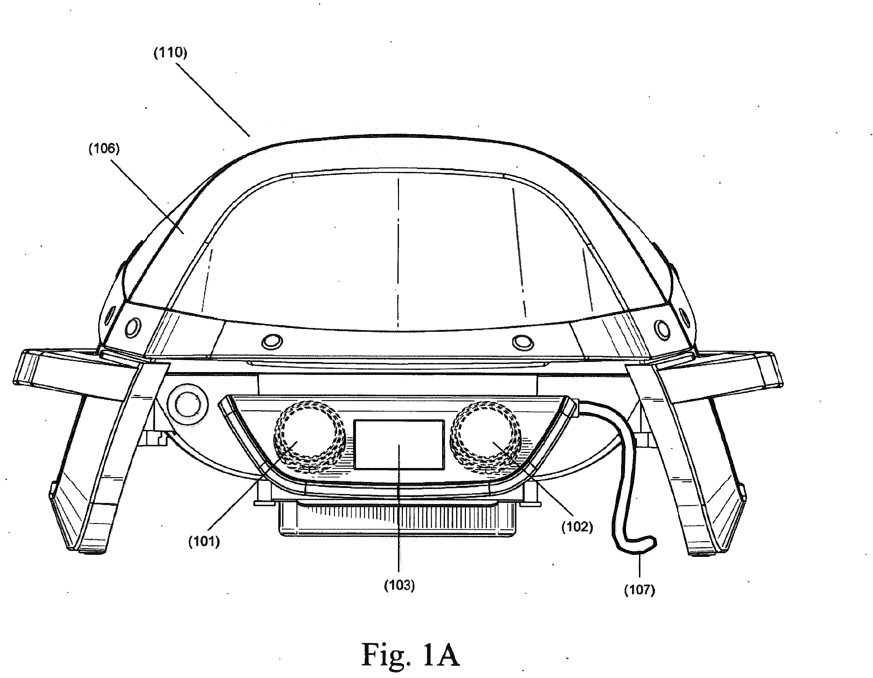

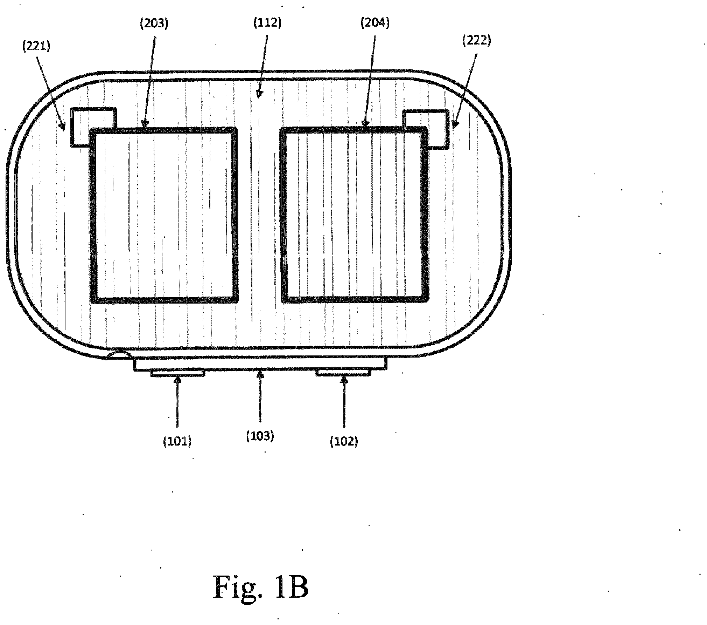

Referring now to the drawings, FIGS. 1-15 show preferred embodiments of an electric grill **110** and a digital power supply **200.** By way of example, Figures 1A and 1B show a representative electric grill **110.** Figure 1A shows the exterior of electric grill **110,** including a housing **106,** onto which left and right control knobs **101** and **102,** as well as display **103,** may be mounted. The electric grill **110** may include a power cord **107** for connecting to an AC wall outlet. Left and right control knobs **101** and **102,** and display **103,** may connect to a microcontroller **213** which is described in greater detail herein.

As shown in Figure 1B, left and right control knobs **101** and **102** may be associated with a first and second heating element, **203** and **204,** respectively, thus creating dual cooking zones. A representative grate or cooking surface **112** is also shown in Figure 1B. Each heating element **203** and **204** may be controlled independently by a knob **101**, **102** or any other controller associated with the heating element **203, 204.** Left knob **101** and right knob **102** may be positioned on the exterior of a grill housing **106**. The knobs **101** and **102,** or any other input device that will be understood by those of skill in the art, may be connected to a microprocessor **213** to set the operating mode of one or more heating elements **203, 204.**

Using knobs **101** and **102,** or any other input device such as a touch screen or buttons (or wirelessly as discussed herein), a user may select an operating mode for each heating element **203** and **204.** The operating mode may include a desired temperature or power setting for the heating element. Microprocessor **213**, described in further detail herein, controls the electric current delivered to heating elements **203** and **204** in order to deliver the selected power. Microprocessor **213** can achieve a desired temperature for each heating element **203** and **204** using a feedback loop in which it receives a current temperature reading from thermocouples **221** and **222,** which are proximally positioned by respective heating elements **203** and **204.** A person of ordinary skill in the art would recognize that various types and numbers of knobs, heating elements, temperature sensors and/or displays may be used.

The electric grill **110** may optionally include a display **103** or other user interface. In one example the display **103** may be connected to microprocessor **213** and display information relating to the current settings or operation of one or more of the heating elements **203, 204.** For example, the display **103** may show the current temperature in the proximity of heating elements **203** and **204** (as measured by thermocouples **221** and **222**), as well as the desired temperature or power setting a user has selected via knobs **101** and/or **102.**

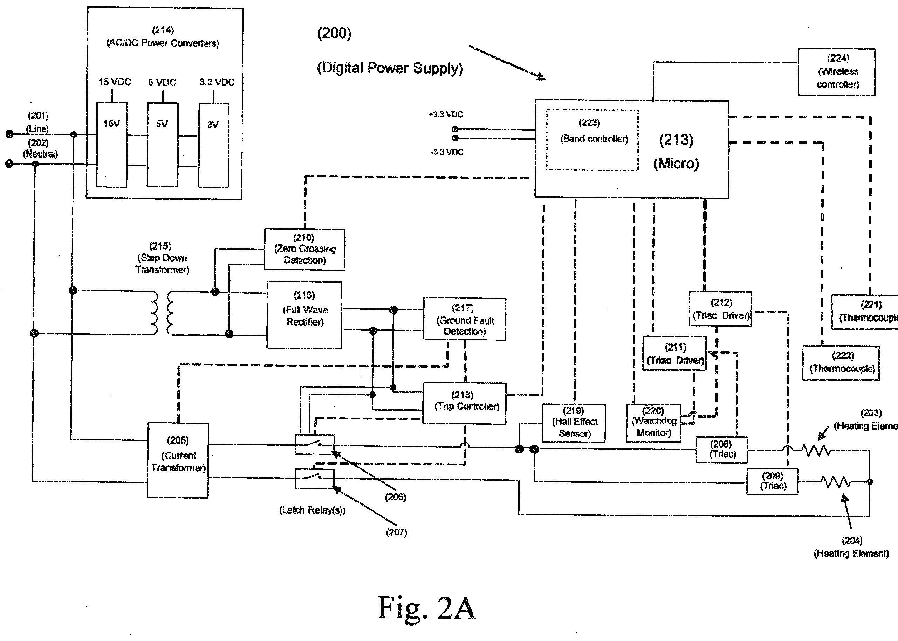

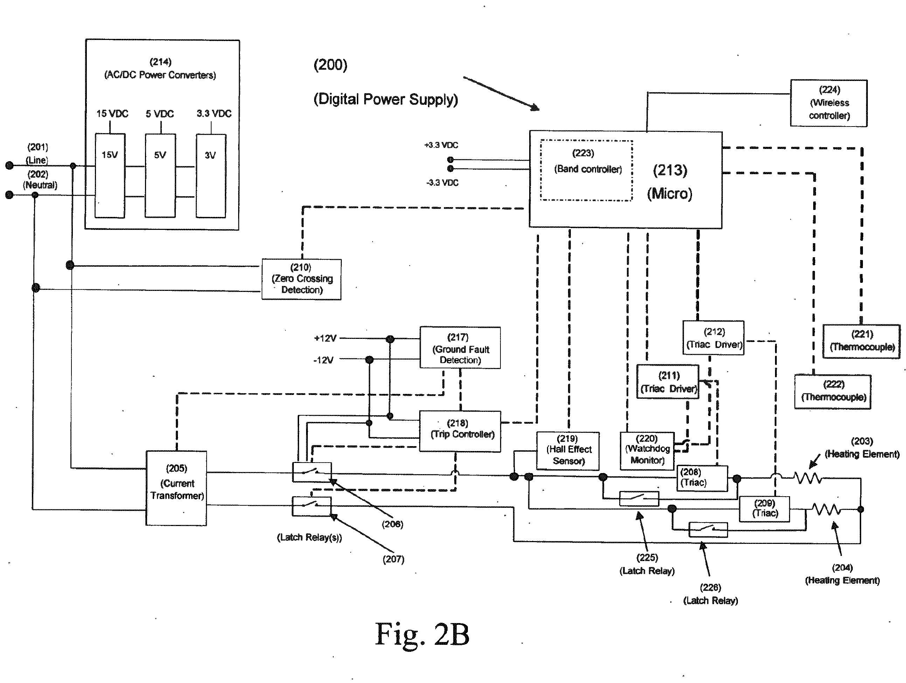

Turning now to Figures 2A and 2B, in general, non-limiting terms, digital power delivery may be accomplished by a microprocessor **213** which receives a user's desired power setting(s) and controls triacs **208** and **209** to enable (or disable) AC current to flow from voltage line **201** through heating elements **203** and **204** and return to a wall outlet through neutral **202**. Additionally provided herein is a specifically configured microprocessor **213** which may control the flow of AC current to the heating elements **203** and **204** in a manner that reduces the amount of harmonic current and flicker introduced by the electric grill **110** to the AC wall outlet.

As shown in the embodiment of Figure 2A, microprocessor **213** is in communication with triac drivers **211** and **212**, which in turn control respective triacs **208** and **209.** The mechanism by which microprocessor **213** may deliver power to heating elements **203** and **204** is by turning triacs **208** and **209** on or off (sometimes referred to as "enabled" and "disabled," respectively) via their corresponding triac drivers **211** and **212.**

Specifically, triacs **208** and **209** turn "on" when they are triggered by a pulse from microprocessor **213**. Current continues to flow until an AC current wave crosses zero. After a zero crossing, a triac turns off and remains off until the next time microprocessor **213** turns it on. In an example where AC current is 60Hz, such as a typical wall outlet, a zero crossing occurs every 1/120$^{th}$ of a second. A zero crossing detection unit **210** is provided to communicate a signal to microprocessor **213** each time an AC wave crosses zero. Using this signal, microprocessor **213** can synchronize its timing to the alternating current's zero crossings.

Instead of permitting direct communication between microprocessor **213** and triacs **208** and **209,** triac drivers **211** and **212** are used to interface between microprocessor **213** and triacs **208** and **209.** Triac drivers can control a high voltage triac with a low voltage DC source (such as a microprocessor) (as seen in the embodiments of Figures 2A and 2B). Moreover, triac drivers are used to isolate devices from a potentially high current or voltage in a triac. Triac drivers **211** and **212** interface between microprocessor **213** and triacs **208** and **209** while at the same time keeping microprocessor **213** isolated from voltages and currents in triacs **208** and **209.**

An "on" triac allows current to flow through it, whereas an "off" triac does not allow current to flow. Thus, an "on" triac **208** permits AC current to flow (from voltage line **201**) through first heating element **203** and an "on" triac **209** permits AC current to flow (from voltage line **201**) through second heating element **204**. To say that microprocessor **213** delivers power to a heating element **203** and/or **204** implies that microprocessor **213** enables the respective triac driver, which turns the relevant triac "on" and allows AC current to flow from line **201**. Throughout this disclosure, it should be understood that references to microprocessor **213** delivering power to a heating element mean that microprocessor **213** is activating a given heating element's triac driver via an "on" or "enable" pulse signal.

As a person of ordinary skill will understand, triacs are three electrode devices, or triodes, that conduct alternating current. Triacs are a type of solid state bidirectional switch. Although this disclosure describes a digital power supply that uses triacs, it should be understood that any solid state bidirectional switch may be used instead of a triac. Heating elements **203** and **204** may be resistive heaters which increase in temperature as more current passes through them. Exemplary heating elements may draw 1150 Watts. Other heating elements **203, 204** may also be used as will be understood by those of skill in the art.

In embodiments of the invention, microprocessor **213** may optionally receive temperature feedback from one or more thermocouples **221** and **222** located proximately to each heating element **203** and **204** in order to recognize when a desired temperature has been achieved. Figure 1B shows an example of thermocouples **221** and **222** adjacent to each heating element **203** and **204**. Although Figure 1B shows a thermocouple as an example, it should be understood that any other type of temperature sensing device, including without limitation thermistors, resistive thermal devices, and the like, may also be used. In an embodiment, the feedback may be used by microprocessor **213** to adjust the current delivered to the heating elements **203** and **204** until the desired temperatures selected by knobs **101** and/or **102** is achieved. As a result, a user can (independently) select a desired operating mode for heating elements **203** and **204**. In embodiments of the invention, microprocessor **213** may control the current delivered until a desired temperature setting is reached and then maintain the desired temperature.

Turning next to the operation of microprocessor **213,** microprocessor **213** may be configured to deliver an appropriate amount of power (as selected by the user) by toggling triacs **208** and **209** between "on" and "off" As described above, an enabled (or "on") triac **208** or **209** allows AC current to flow from line **201** through heating elements **203** or **204,** respectively. Therefore it follows that a longer "on" period allows more AC current to flow and therefore delivers more power. Conversely, a longer "off" period results in lower power delivery.

In embodiments of the invention, microprocessor **213** may use phase angle control techniques to create a pattern of toggling between "on" and "off." The control pattern created by toggling between "on" and "off" controls the phase angle of AC current (and by extension, power) flowing from voltage line **201** through heating elements **203** and **204**. This type of control pattern is sometimes referred to as "phase cutting," because AC current's wave forms may be "cut" off. Waves are cut by disabling the flow of current during part of an AC wave cycle. In this way, part of the wave becomes "cut" off. The timing pattern of "on" and "off" creates a phase-controlled wave. To determine the correct angle at which to cut a wave for a desired power delivery, microprocessor **213** solves the equation:

$$(angle) = \arccos(2x-1)$$

where x is the desired power delivery (expressed as a percentage: $0.0 \leq x \leq 1.0$). Microprocessor **213** is programmed to solve for the angle at which to cut the AC sine wave delivered to heating elements **203** and **204**. This disclosure refers to angles in "degrees," but a person of skill in the art will understand that every angle measurement may be converted into the unit "radians."

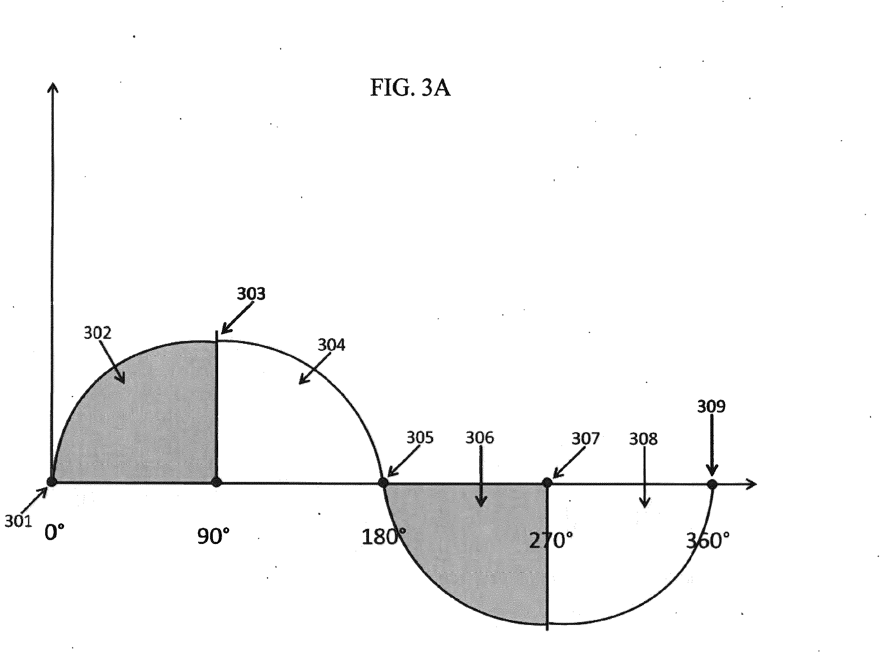

An example is provided in Figure 3A, which illustrates an example where microprocessor **213** cuts an AC wave at 90°. A 90° cut produces a wave that delivers half (i.e. 50%) of the total available power. Figure 3A shows one wave cycle of an AC current. A person of skill in the art will understand that a complete wave has a positive half and a negative half. The wave cycle begins at **301** where the current's value is zero. The area between **301** and **303**, numbered **302** is shaded gray to indicate a triac is not enabled and therefore current is not being delivered. At **303**, which represents a 90° phase angle, microprocessor **213** sends a pulse signal to activate a triac and thus allow current to flow through a heating element. (Stated differently, microprocessor **213** begins delivering power at 303). At **305**, current crosses zero and the triac turns off. The triac remains off until **307**, which represents a 270° phase angle. At 270°, microprocessor **213** again sends an activating pulse and current flows for a 90° phase, between **307** and **309**, i.e. from 270° to 360°.

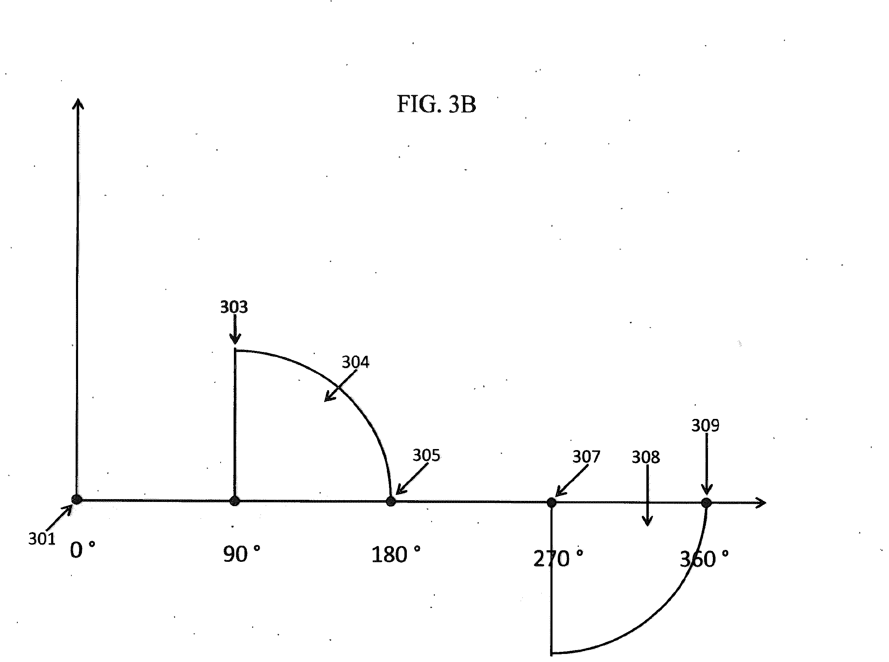

In sum, Figure 3A shows microprocessor **213** delivering power for the areas marked **304** and **308,** each representing 90° phases, for a combined 180°. No power is delivered for the shaded areas marked **302** and **306**, also representing 90° each, for a combined 180°. In this way, microprocessor **213** has delivered half, or 50%, of the power that was available. To deliver a different power percentage, microprocessor **213** may send an activating pulse earlier in a half-wave to deliver more power, or later in a half wave to deliver less power. For any desired power percentage, the appropriate phase angle cut may be calculated by microprocessor **213** solving for (angle) = arccos (2x-1). In the example of Figure 3A, a 50% power deliver was selected. Therefore, microprocessor **213** executed the calculation (phase angle) = arccos (2*0.5 - 1) = 90°. Figure 3B removes the "cut off" wave portions of Figure 3A and shows only the power actually delivered.

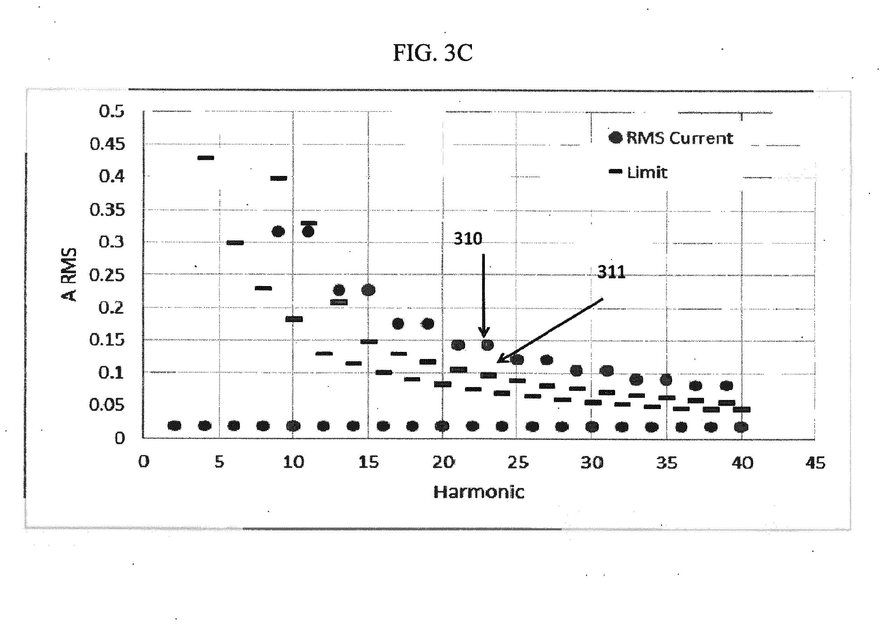

Turning now to Figure 3C, a graph is provided which shows the harmonic currents introduced into a power system by a 90° phase cut described in Figures 3A and 3B. In other words, these plotted harmonic currents may be introduced into a building's power lines when an electric grill is plugged into a wall outlet and makes the 90° phase cut described in Figures 3A/3B. The plot is made using a 1150W heating element. Introducing harmonics is undesirable because it leads to electromagnetic interference. Moreover, there are standards, such as *IEC 61000-3-2 Electromagnetic compatibility (EMC) - Part 3-2,* which limit the level of harmonic currents that may be introduced into a wall outlet by a device. The harmonic current limits are plotted as line segments in the graph of Figure 3C. As will be clear from Figure 3C, the harmonic currents (plotted as points) introduced by the 90° phase cut exceed the harmonic limits (plotted as line segments). In other words, the graph in Figure 3C shows that the points (representing the RMS current) are higher than the lines which mark the harmonic limits.. This means that the wave forms of Figures 3A/3B have high harmonic currents and do not comply with the IEC standard. For example, RMS current at point **310** is one example of a harmonic current that exceeds (i.e., is above) the harmonic limit **311**.

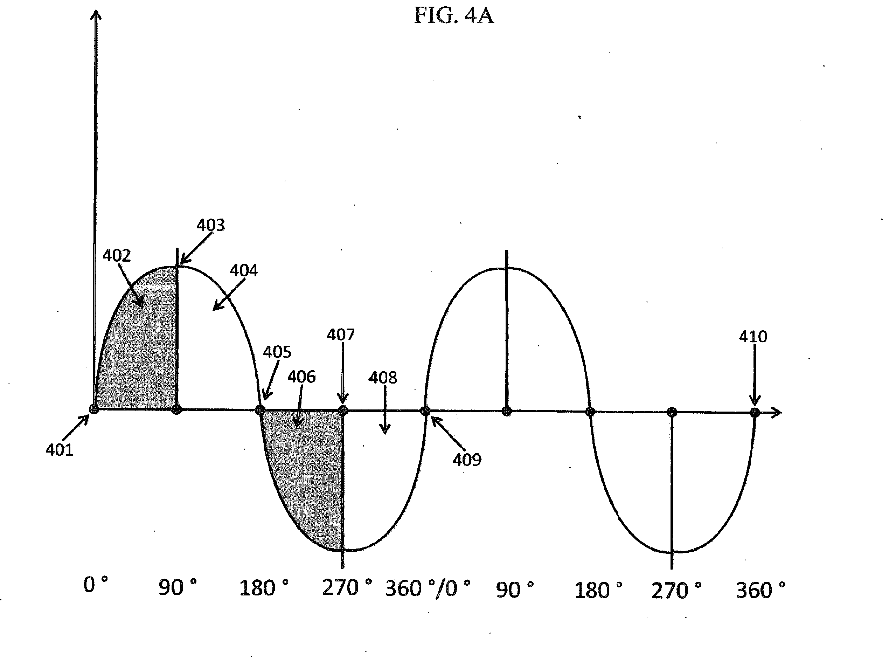

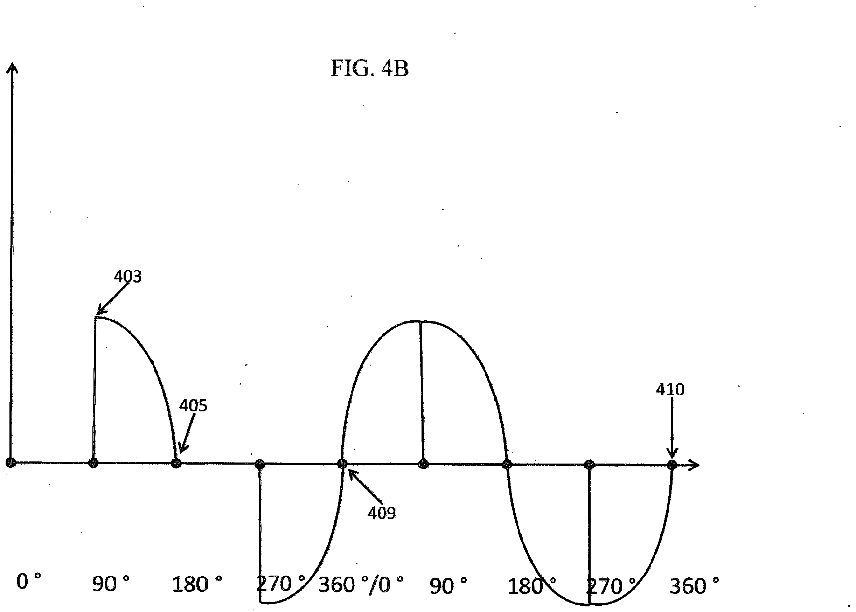

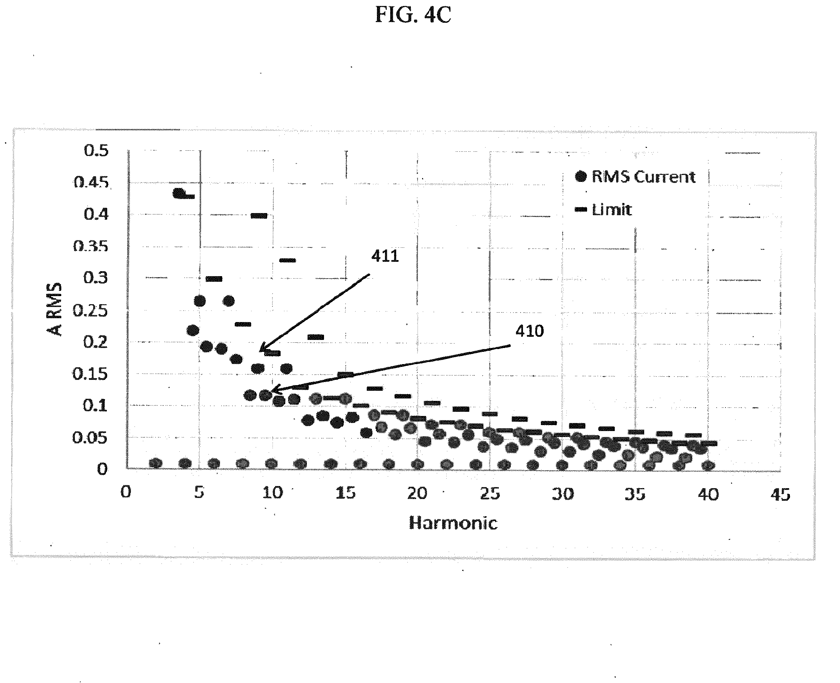

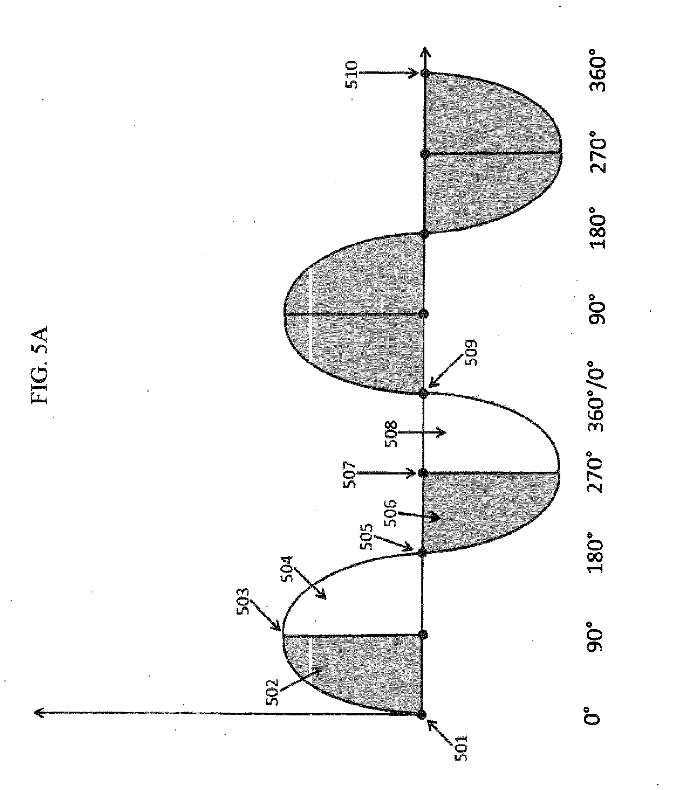

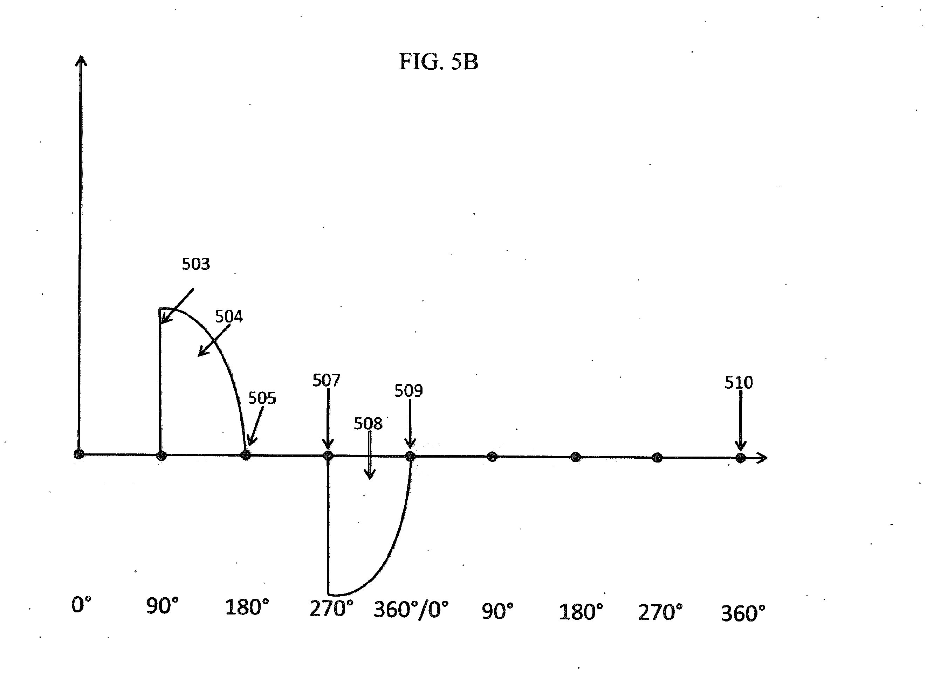

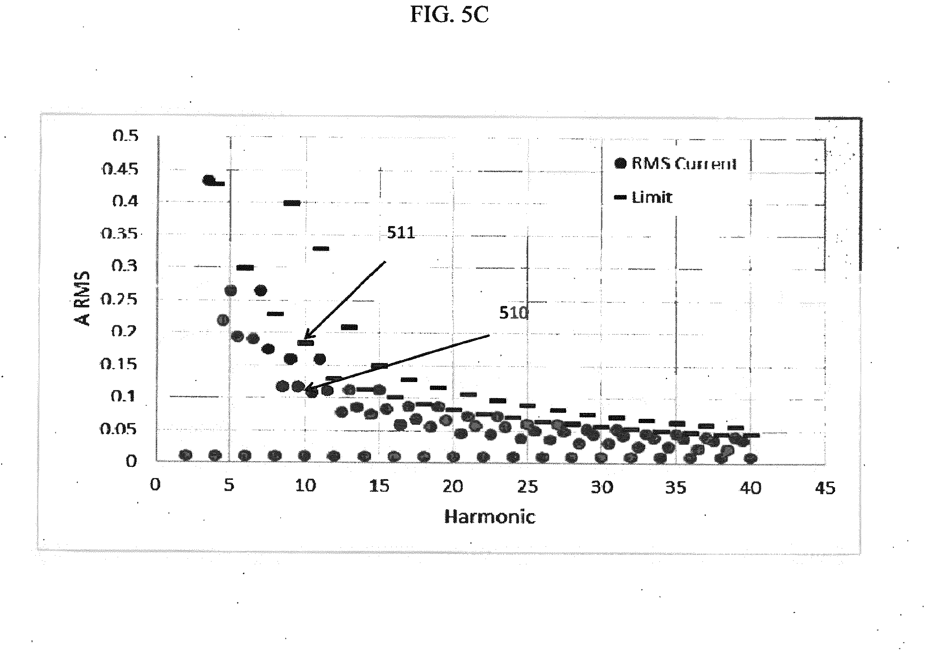

Therefore, embodiments of the inventions include a microprocessor **213** specially configured to deliver power to electric loads using wave cuts that induce harmonic currents having reduced magnitudes. As an initial matter, Applicants' testing has shown harmonic currents' magnitudes are reduced when a wave cut is immediately followed by a full wave cycle "on" or a full wave cycle "off." Applicants' test results are shown in Figures 4 and 5. In particular, Figure 4A shows a first wave cycle having the same 90° cut as in Figure 3A, but is followed by a subsequent second wave cycle (between **409** and **410**) that is fully "on" Similarly, Figure 5A shows a first wave cycle having the same 90° cut as Figure 3A, and additionally followed by a second full wave cycle (between **509** and **510**) that is fully "off." For clarity, Figures 4B and 5B show the same respective patterns without the "cut" portions of a wave. Applicants' testing, shown in Figures 4C and 5C, shows that a 90° cut induces fewer harmonics when it is followed by a subsequent full "on" or a full "off" wave cycle. These results can be seen in Figures 4C and 5C , where the plotted harmonic currents (points) are now below the harmonic current limits of the IEC standard (plotted as line segments), and are noticeably lower than the harmonic currents plotted in Figure 3C. By way of example, Figure 4C shows an exemplary RMS current point **410** that is below the harmonic limit **411**. Unlike Figure 3C, the RMS currents of Figure 4C are under the harmonic limits. The same applies to Figure 5C, where exemplary current point **510** is under the harmonic limit of **511**.

Therefore, embodiments of the inventions include a microprocessor **213** specifically configured to follow a cut wave with either a full "on" or a full "off" wave. Moreover, microprocessor **213** may be specifically configured to draw current in a pattern that reduces harmonic currents while still managing to split the drawn current among two independent heating elements **203, 204.** In other words, microprocessor **213** must manage the pattern of the overall current drawn by the electric grill **110** while simultaneously satisfying the power requirements of both independent heating elements **203, 204.** The pattern of the overall current drawn by electric grill **110** may be referred to as the electric grill **110**'s total power array. The electric grill **110**'s total power array is the sum of the first heating element **203**'s power array plus the second heating element **204**'s power array. An exemplary power array may be four cells, each cell containing a value ($0.0 \leq x \leq 1.0$) representing a percentage of power to deliver in a wave form. Thus, an exemplary power array may represent a pattern of four waves. It will be understood that the total power (or, current) drawn by electric grill **110** is the sum of the power (current) drawn by the heating elements. The wave form patterns delivered to the heating elements **203, 204** may likewise be represented as four-celled power arrays. The first heating element's power array summed with the second heating element's power array equals the electric grills total power array. The same holds true for any number of heating elements in an electric grill **110**. The electric grill **110**'s harmonic currents depend on the pattern of waves drawn by the electric grill **110**, represented in the total power array. To reduce harmonic currents, electric grill **110**'s total power array should represent a pattern where each "cut" wave is followed by a full "on" or a full "off" cycle.

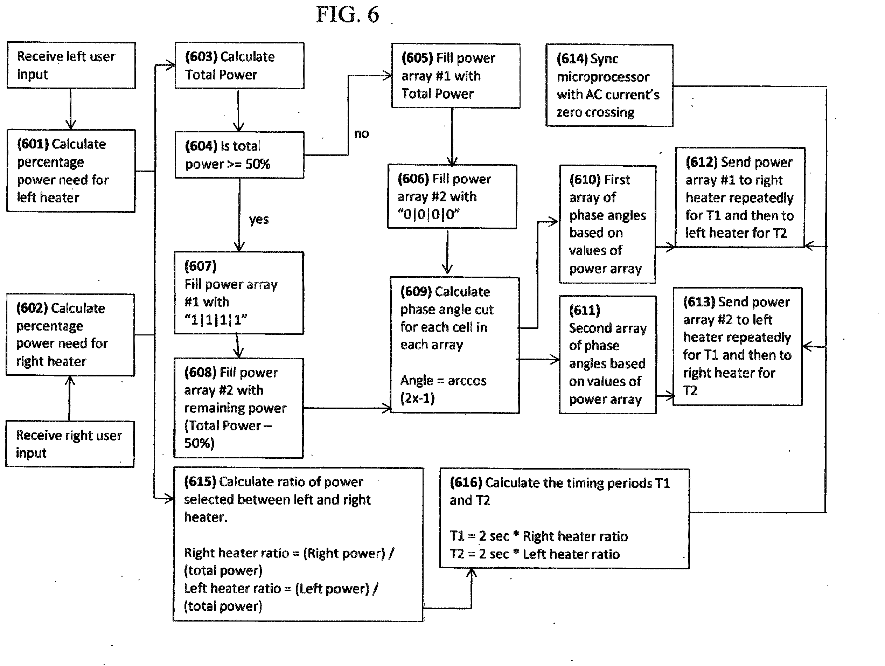

Figure 6 is a flow chart showing an exemplary configuration of microprocessor **213** for controlling two heating elements while introducing fewer harmonics. Generally speaking, microprocessor **213** calculates a power array to deliver to each heating element **203, 204**. The power arrays depend on a user's power settings for each of the two heating elements **203, 204** as well as feedback from thermocouples **221** and **222.** In this example, each power array consists of four cells (but another number of cells may be used), each cell containing a number ranging between $0.0 \leq x \leq 1.0$. Each of the four cells represents a wave cycle, the cell's number indicating the percentage of power delivered during that wave cycle. By way of example, an array of "1 | 0 | 1 | 0" would represent one "on" wave, one "off" wave, another "on" wave, and another "off" wave. Microprocessor **213** delivers the wave forms from the two calculated power arrays to the two heating elements **203, 204** by toggling the triac drivers **211** and **212** in the manner described above.

Addressing Figure 6 more particularly, microprocessor **213** communicates with a first and second user input device, such as a left knob **101** and a right knob **102**. The first and second user input devices convey a power level for each of the two heating elements **203, 204.** The desired power levels can be converted by microprocessor **213** into a percentage of total power at steps **601** and **602.** Microprocessor **213** determines if the total power **603** is greater than or equal to 50% at step **604**.

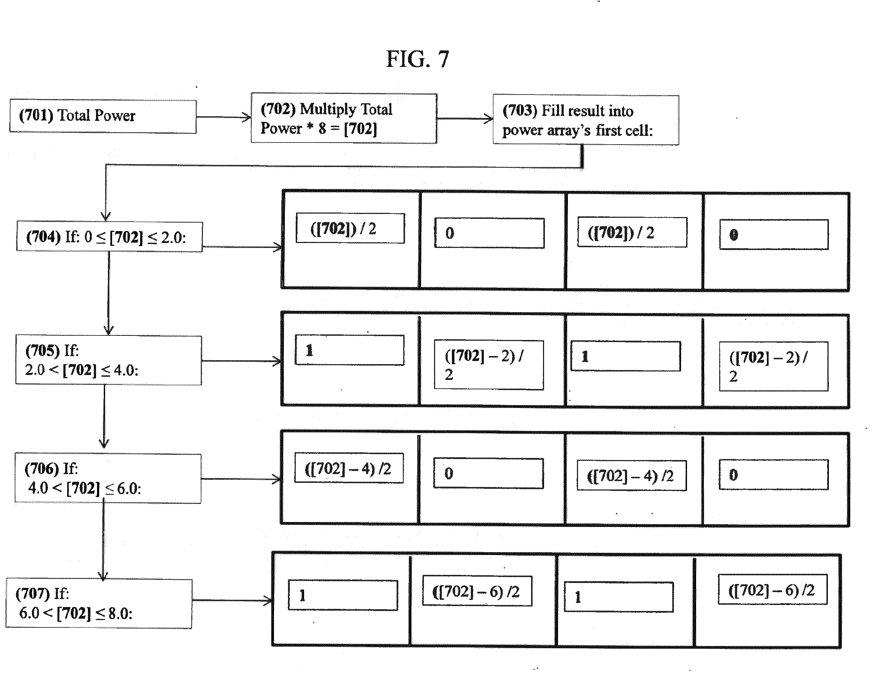

At **605**, where a user's selected total power is less than 50%, microprocessor **213** begins filling (or, "populating") the cells of the first power array. Figure 7 shows the steps microprocessor **213** is configured to execute to fill, or populate, a power array. As seen in Figure 7, microprocessor **213**'s calculation begins at **701** with the total power requested by a user.

(This is the sum of the power requested for the right heating element and the power requested by the left heating element as determined in **603**). The percentage of total power requested is multiplied by 8 (because there are 2 arrays x 4 cells each) at step **702**. The value of step **702**, herein referred to using the notation [**702**], is used to populate a power array at **703**. If the value of **702** is less than or equal to 2.0, the value of **702** is distributed evenly between the first and third array elements to arrive at: "([**702**]/2) | 0 | ([**702**]/2) | 0." This is seen at step **704**. If the value of **702** is greater than 2.0, then the first and third array elements are filled with "1," and the remainder (subtracting 2 from the value of **702**) is distributed evenly between the second and fourth cells. This is seen at **705**. Using this technique, a power array is constructed to have a full "on" or a full "off" wave that follows a cut wave to reduce the magnitude of harmonic currents. Moreover, the power array's alternating pattern reduces flicker, as described in more detail below. Returning now to Figure 6, the second power array is filled with four zeros: "0 | 0 | 0 | 0" at step **606**.

Again by reference to Figure 6, if the Total Power **603** equals or exceeds 50%, microprocessor **213** fills the first power array with all 1's ("1|1|1|1.") at step (**607**). Microprocessor **213** then populates the second power array using the conditions of **706** and **707** . Regardless of whether the user has requested more or less than 50% power, one of the two power arrays will have the alternating pattern "A | B | A | B," while the other array will have the pattern "C | C | C | C," where C = 0 or 1. Once the first and second power array have been populated, they are delivered to the heating elements **203** and **204.**

Power is delivered by microprocessor **213** to a triac driver based on the values in the four cell power arrays. As described above, each cell represents one full wave cycle, and the cell's numeric value represents the percentage of power to deliver in that wave cycle. As also described above, embodiments of the inventions may use phase cutting techniques to control power. Thus, at step **609**, microprocessor **213** is configured to calculate the phase angle at which to "cut" a wave in order to achieve the power represented by a cell in a power array. Microprocessor **213** is configured to solve the equation:

$$\text{(angle)} = \arccos (2 * \text{power} - 1),$$

where "power" is the power represented by a number in a power array's cell. Microprocessor **213** uses this angle to deliver a wave cycle having power that corresponds to the cell's numeric value. The calculation may be repeated for each cell in each power array. Each cell of each power array may be converted into a corresponding phase angle **610** and **611**. The corresponding phase angle arrays contain phase angles, rather than power percentages, and may be stored in the same format at the power arrays.

At step **614**, microprocessor **213** may synchronize its timing to the phase angle of AC current in line **201**. As described above, microprocessor **213** receives a zero crossing signal from zero crossing detection **210** each time the AC current crosses zero from zero crossing detection unit **210**. The zero crossing signal can thus synchronize microprocessor **213**'s timing (and therefore by extension, the angle) of an AC wave. For example, a person of skill in the art will then recognize that a wave of AC current has the following angles at the indicated points in time:

Table 1.

| Desired phase angle "cut" | 60 Hz AC current:<br>Time (where zero crossing is t=0) |
|---|---|
| 0° | 0 seconds |
| 10° | 0.000462963 seconds |
| 20° | 0.000925926 seconds |
| 30° | 0.001388889 seconds |
| 40° | 0.001851852 seconds |
| 50° | 0.002314815 seconds |
| 60° | 0.002777778 seconds |
| 70° | 0.003240741 seconds |
| 80° | 0.003703704 seconds |
| 90° | 0.004166667 seconds |

Using this information, microprocessor **213** may use an internal timing mechanism, such as a clock signal generator or any other appropriate mechanism, to send the "on" or "enable" pulse at an instance corresponding to the angle required for the correct "cut." For example, Table 1 shows that a 90 degree cut would be made by activating a triac 0.004166667 seconds after a zero crossing. Microprocessor **213** may use a clock signal to enable a triac at the appropriate point in time. A person of skill in the art reading this disclosure will understand how to calculate the timing for any desired wave "cut."

Turning now to steps **612** and **613**, the first power array is delivered to the first triac driver 211 and the second power array is delivered to the second triac driver **212** for a period of time equal to T1. This power delivery continues repeatedly for a first time period T1, after which microprocessor **213** delivers the first power array to the second triac driver **211** and delivers the second power array to the first triac driver **212** repeatedly for a second time period T2. After T1, delivery is "flipped" and the first triac driver **211** receives the second power array for duration of T2. The first and second power array, summed together, equal the electric grill **110**'s total power array - thus, by definition, the first and second power array must always be delivered simultaneously.

The discussion now turns to the calculation of time periods T1 and T2 at **615** and **616**. The purpose of time periods T1 and T2 is to "split," or pro-rate, the total power drawn by the electric grill (or any other device using embodiments of the invention) between the two heating elements (or any other electric load) according to the independently selected power for each respective heating element. The power arrays created at steps **605** through **608** create an acceptable wave pattern for the electric grill as a whole. The sum of the power arrays, which is the electric grill **110**'s total power array, will have a full "on" or full "off" wave following each cut wave, which reduces the magnitude of harmonic currents. It is additionally necessary to calculate the delivery time of each power array to the respective heating elements **203**, **204**.

The time period T1 is calculated by taking the power setting for the first heating element **203** and dividing it by the total power selected, **603**. That ratio is then multiplied by the power delivery phase, which is 2 seconds in this example but may be varied. T1 and T2 are simple ratios of a given heating element's power setting compared to the total requested power. The calculation may be summarized by the following equation:

T1 = 2 seconds * (power selection for first heating element) / ((power selection for first heating element) + (power selection for second heating element)).

Similarly, T2 is the same calculation, this time for the second heating element **204**:

T2 = 2 seconds * (power selection for second heating element) / ((power selection for first heating element) + (power selection for second heating element)).

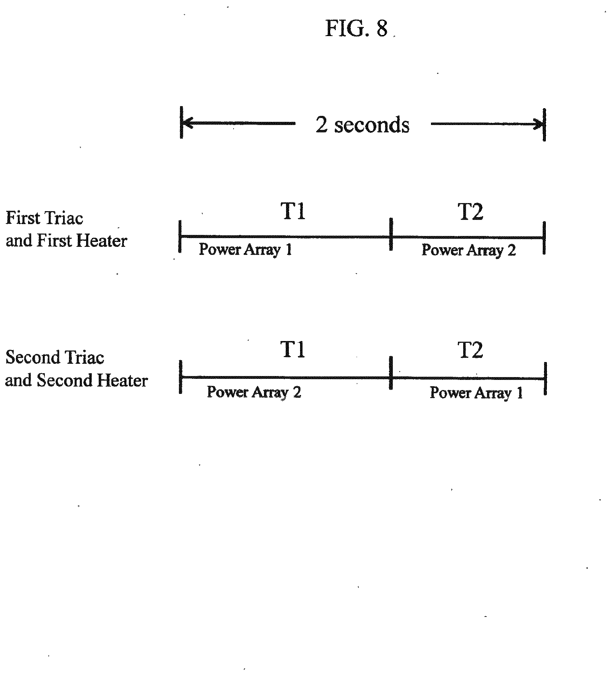

Figure 8 summarizes microprocessor **213**'s power delivery of the first and second power array to the first and second triac drivers over a power delivery phase of 2 seconds: the first triac driver **211** (and by extension first heating element **203**) receives the waves represented by the first power array for a time T1. It then receives waves represented by the cells of the second power array for a time T2. Conversely, the second triac Driver **212** (and by extension the second heating element **204**) receives waves represented by the cells of the second power array during the time period T1, and then receives waves represented by the cells of the first power array during the time period T2.

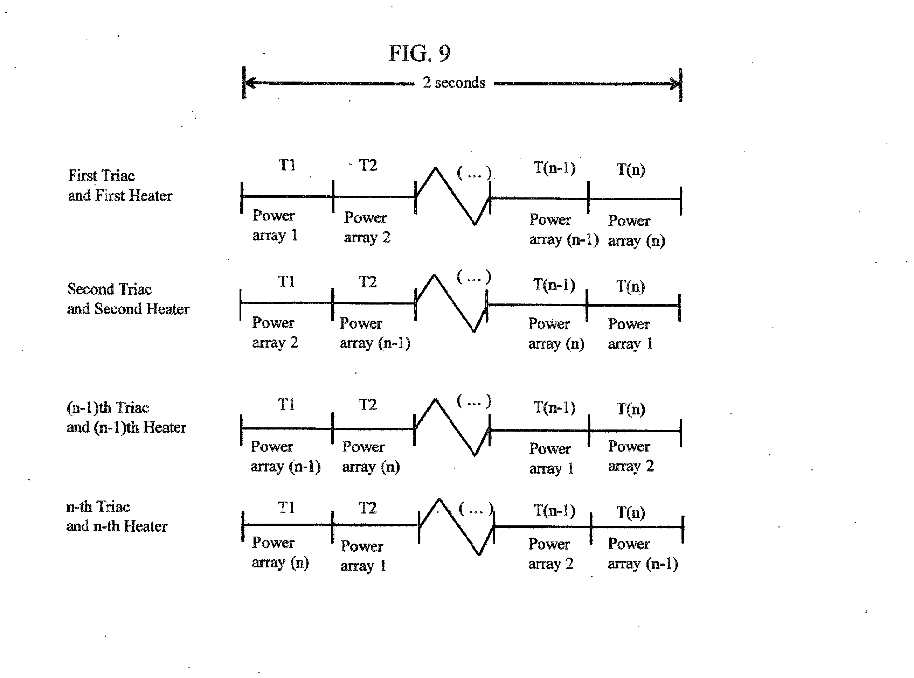

Embodiments of the present invention may be scaled to independently deliver power to more than two loads. In an embodiment where a digital power supply independently controls "n" number of loads, n power arrays are required. Moreover, the decision at **604** would compare the total power to 100%/n. The technique for filling the power arrays of Figure 7 remains applicable, although rather than multiply by eight (8), it would be necessary to multiply step **702** by (n * 4). Moreover, at steps **615** and **616**, n time periods are required. Figure 9 shows the timing of n-power arrays delivered across n-time periods. It should be understood that embodiments with multiple heaters without independent control are also contemplated by this disclosure.

The present inventions also provide methods for independently controlling two heating elements and providing variable power while providing reduced harmonic currents and flicker. In an embodiment of the invention, a user activates electric grill **110** and selects a first and second power level, for example by controlling knobs **101** and **102.** By activating an electric grill **110**, a user controls microprocessor **213** to execute the following steps for the benefit of controlling one or more heating elements. It is understood that some embodiments may include any number of knobs or other user inputs, including wirelessly. By activating the electric grill **110,** a user turns on microprocessor **213**. Microprocessor **213** receives the user's selected power settings and performs the above-described calculations to activate triac drivers **211** and **212** in a control pattern that delivers phase-controlled wave forms to heating elements **203** and **204**.

In embodiments of the invention, microprocessor **213** performs the step of calculating the appropriate phase controlled wave forms by populating two power arrays **605-608**. Each power array may have four cells. Each cell contains a number "n," where $0.0 \leq n \leq 1.0$. The number "n" represents a wave form having "n"-percentage of power. The waves are cut to eliminate "excess" power. Microprocessor **213** performs the step of filling in the power arrays by calculating the total power requested by all heating elements **203, 204,** which may be expressed as a percentage of selected power as compared overall available power (in decimal form).

If the total power requested (i.e. the total requested power for all heating elements) by the user is less than 50% of the overall available power, microprocessor **213** performs the step of filling in the first power array (**605**). The power array is populated by distributing the total power number into the power arrays four cells. At **606**, microprocessor **213** performs the step of filling all zeros into the second power array (i.e. "0000"). If the total power requested by the user is greater than, or equal to, 50% of the overall power, microprocessor **213** performs the steps of fillings the first power array with 1's (i.e. "1 | 1 | 1 | 1") and the second power array is filled (with Total Power - 50%, i.e. [**702**] minus 4) according to the steps of Figure 7.

Once the first and second power array are calculated, microprocessor **213** delivers wave forms corresponding to the cells of each power array. In particular, each cell's value represents the percentage of power to deliver in one wave cycle. To deliver a wave having any given percentage of power, microprocessor **213** calculates a phase angle = arccos(2*x - 1), where x is the power percentage described in any given cell. Microprocessor **213** uses the calculated angle to deliver an "on" signal to triac Drivers **211** or **212** at a point in time corresponding to the calculated phase angle. Microprocessor **213** may use a zero crossing signal and the above-described Table 1 to determine the correct timing.

Microprocessor **213** repeatedly delivers the first power array to the first triac driver **211** and the second power array to the second triac driver **212** for a time period T1. After T1 has passed, microprocessor **213** "flips" the first and second power array for a time period T2. In other words, as seen in Figure 8, after T1 ends and T2 begins, the first power array is delivered to the second triac driver **212** and the second power array is delivered to the first triac driver **211**.

Microprocessor **213** performs the step of calculating T1 and T2 as:

$$T1 = 2 \text{ seconds} * (\text{First heater total power} / \text{Combined heater total power})$$

$$T2 = 2 \text{ seconds} * (\text{Second heater total power} / \text{Combined heater total power}).$$

Mathematically, it follows that the power delivery phase of T1 + T2 = 2 seconds.

In this way, the power arrays are delivered for a combined power delivery phase of 2 seconds. It is contemplated that longer or shorter power delivery phases may be used. After 2 seconds, microprocessor **213** may re-calculate the power arrays. By re-calculating the power arrays, microprocessor **213** may account for a change in user settings, or to switch from raising a heating element's temperature to maintaining a temperature.

An operating example applying the devices and methods described above is provided. For example, a user may wish to use the grill **110** with different power levels for the first and second heating elements **203** and **204** - for instance, microprocessor **213** may determine that a first heating element **203** should have 17.5% of its maximum power, and a second heating element **204** should have only 5% of its maximum power. In accordance with the embodiments described herein, microprocessor **213** is configured to deliver 17.5% and 5% power, respectively, while drawing power in a pattern that reduces the harmonic currents introduced by the electric grill into the AC wall outlet.

In this example, the first and second power arrays are calculated as follows: the first and second selected power levels are combined to arrive at a total selected power: 17.5% + 5% = 22.5%, or 0.225 (See **603**). Because this is less than 50%, microprocessor **213** proceeds with step **605**. Using the techniques described herein, microprocessor **213** multiplies by eight (8) to arrive at 0.225 * 8 = 1.8. Next, microprocessor **213** fills the value 1.8 into the first power array. In particular, the first cell and third cells receive the value of (1.8)/2 = 0.9. The second and fourth cells remain "0." Thus, the first power array is "0.9 | 0 | 0.9 | 0" and the second power array is "0 | 0 | 0 | 0."

For a time period T1, the first power array is delivered to the first triac driver **211** and the second power array is simultaneously delivered to the second triac driver **212.** In delivering the first and second power array, microprocessor **213** sends an "on" signal to the respective triac driver **211** and/or **212** at a time that corresponds to the "cut" of the wave. For example, the first power array's first cell dictates that a 90% power wave (i.e. 0.9) is delivered. A 90% power wave requires a "cut" angle of arccos (2*.9-1) = 36.86°. Microprocessor **213** delivers a 90% power wave by turning triac driver **211** "on" at 36.86°. Similar to the values of Table 1, a 36.86° cut can be made by delivering power 0.0017 seconds after a zero crossing. Subsequently, the second cell dictates that an "off" wave having 0% is delivered. The third wave is the same as the first wave, i.e. cut at 36.86°, and the fourth wave is the same as the second wave, i.e. "off." The second power array in this example is "0 | 0 | 0 | 0," thus the second triac driver **212** is never activated.

This delivery pattern is continued for a time period T1 as described at **612** and **613.** Here, T1 is calculated as T1 = 2 seconds * (First heater total power / Combined heater total power) = 2 * (0.175/0.225) = 2 * 0.78 = 1.56 seconds. Similarly, T2 = 2 * (0.05/0.225) = 0.44 seconds. In this example, the first power array ("0.9 | 0 | 0.9 | 0") is delivered to the first heating element **203** and the second power array ("0 | 0 | 0 | 0") is delivered to the second heating element **204** for T1= 1.56 seconds. After 1.56 seconds, microprocessor "flips" the delivery of the first and second power array for a period of 0.44 seconds. After a combined 2 seconds have passed, microprocessor **213** may begin by re-filling the first and second power array according to the power needs at that point in time.

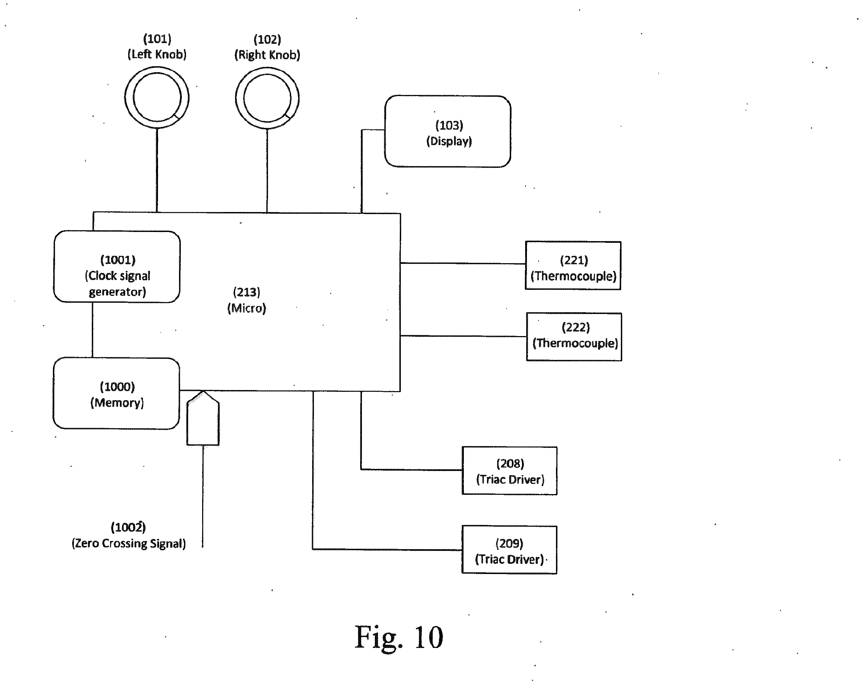

It will be understood that microprocessor **213** may include internal or external memory **1000** for reading and/or writing in connection with executing the steps and configurations described herein. Moreover, it will be understood that microprocessor **213** may have an internal or external clock signal that may be used to time the "on" signal sent to a triac. The clock signal may be generated by an on-board clock signal generator **1001,** or by an external clock. Figure 10 is an exemplary schematic showing inputs and outputs to microprocessor **213.** Examples include a left and right knob **101, 102** and a display **103.** Additional examples include thermocouples **221, 222,** and communication with triac Drivers **208** and **209.** Memory **1000** and clock **1001** are also shown, as is the input signal **1002** from zero crossing unit **210.**

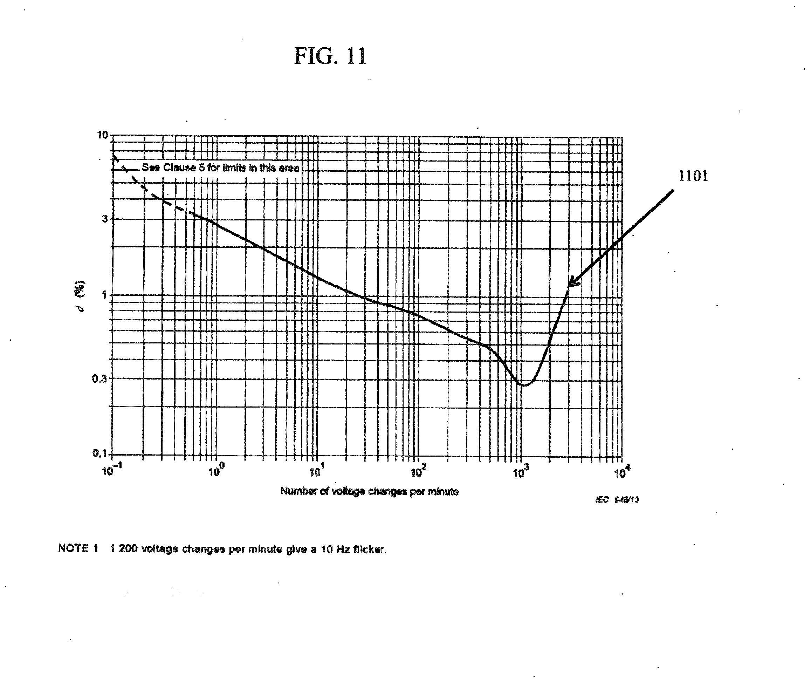

An additional benefit of embodiments of the devices and methods described herein is a reduction in flicker introduced by the digital power supply **200** into a wall outlet. Flicker is undesirable because, at certain frequencies, it will cause lights connected to an outlet to flicker or dim. Figure 11 shows the flicker limits of *IEC 61000-3-3 Electromagnetic compatibility (EMC) - Part 3-3 (Voltage Fluctuations and Flicker).* Flicker is measured as a % change in voltage.

Embodiments of the present invention may reduce flicker levels to a wall outlet based on voltage changes resulting from wave-cuts within a single power delivery phase. A person of skill in the art will recognize that flicker is commonly measured during a devices "steady state."

The voltage changes within a single power deliver phase comply with the flicker regulations. As seen at **1101** (and further described in the standard), the IEC 61000-3-3 requirement's last data point occurs at 2875 voltage changes per minute. This equates to a cycling frequency of 23.96 Hz. In other words, voltage changes occurring at a frequency above 23.96 Hz have no flicker requirement because they are beyond human perception. Embodiments of the devices and methods disclosed herein create a wave pattern in which electric grill **110** alternates between a cut wave and a full "on" or a full "off" wave. Following this pattern, electric grill **110** would create 25 voltage changes per second (25 Hz) at 50 Hz AC and 30 voltage changes per second (30 Hz) at 60 Hz AC. A cut wave followed by a full wave counts as one voltage change. The 25Hz and 30 Hz cycling frequencies are above the standard's last data point of 23.96 Hz and therefore comply with flicker requirement.

An additional benefit of embodiments of the invention comes from splitting power into multiple power arrays and delivering them to multiple heating elements. Using the techniques described in Figures 6 and 7, one of the power arrays will always be "0|0|0|0" or "1|1|1|1." This ensures that only one of heating element **203** or **204** can receive a "cut" wave at any given time. As a result, the electric grill **110's** used current (or power) will never be dropped by more than half (1/2) of the maximum rated power. To give an example, if two heating elements **203** and **204** each draw 1150 Watts, for a combined 2300 Watts drawn by the electric grill **110**, then even a 90° in one heating element **203** or **204** would only result in a maximum power drop of 1150 Watts. This helps reduce the magnitude of harmonic currents.

Alternative configurations and methods for independently delivering power to two or more loads, such as heating elements **203, 204,** while still satisfying flicker and harmonic requirements, are also disclosed herein. For example, in embodiments where it is not necessary to deliver fully variable power (i.e. ranging continuously from 0 to 100%), microprocessor **213** may be configured to deliver discrete values - such as 0%, 50%, or 100% power - to each heating element (independently). In such an embodiment, it is not necessary to perform the power array calculations described in Figures 6 through 9, and their associated text. As disclosed herein, compliance with flicker and harmonic requirements may still be achieved using discrete power delivery. Microprocessor **213** may be configured to deliver combinations of 0%, 50%, or 100% independently to two heating elements, thereby avoiding any phase cuts which introduce flicker or harmonic distortion.

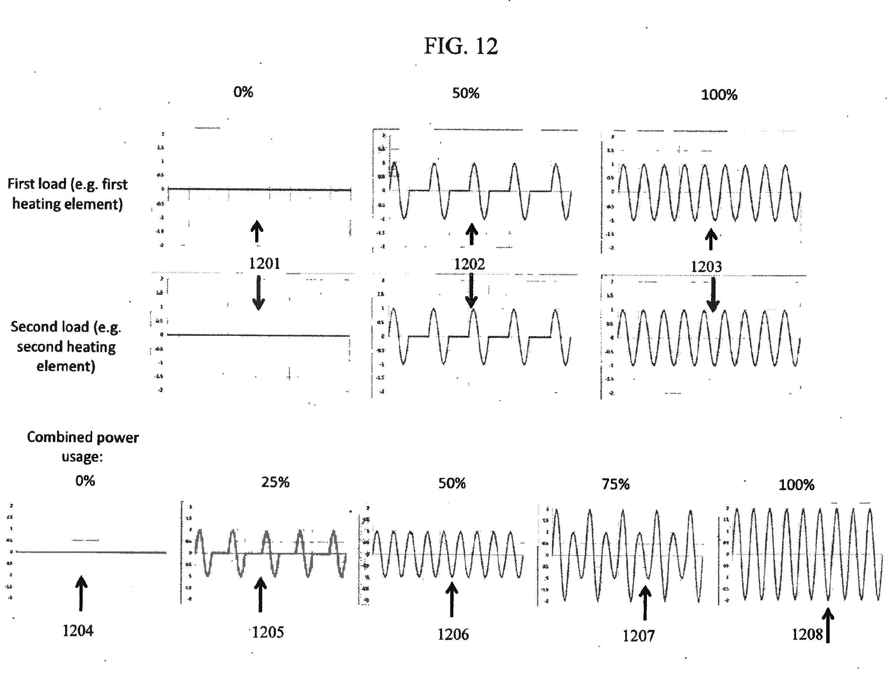

More specifically, Figure 12 illustrates how microprocessor **213**, and electric grill **110** generally, deliver power to heating elements **203, 204** using discrete power levels, without introducing phase cuts into the electrical system. For example, the wave form **1201** shows 0% power delivery. Wave form **1202** shows 50% power delivery, which microprocessor **213** delivers by controlling current delivered to heating elements **203, 204** (e.g. delivering alternating "on" and "off" waves). More specifically, in the wave forms **1202,** microprocessor **213** delivers 50% power by delivering one full wave cycle, and then "skipping" the next wave. Thus, only one wave is delivered in every two cycles, which amounts to 50% power delivery. The waveforms of **1203** show full power delivery, during which microprocessor **213** delivers full wave forms.

The waveforms **1204** through **1208** show the combination of 0%, 50%, or 100% power to each of the two heating elements. For example, if two heating elements are both operating at 0% power, the combined power usage (e.g. the combined power profile for electric grill **110**) is 0, i.e. a flat line, as seen in wave form **1204.** When one heating element is operating at 0% and the other is operating at 50%, the combined power profile is 25% - seen in waveform **1205,** where the wave amplitude is half of the maximum, and every second wave is skipped. A person of skill in the art will recognize that such a waveform amounts to 25% of the available power.

The waveform of **1206** represents a device (for example electric grill **110**) drawing 50% of available power. This scenario occurs where both heating elements are drawing 50% power, or where one heating element draws 100% power and the second heating element draws 0% power. Although not necessarily visible from the scale of waveforms **1202,** it should be understood that a first and second heating element, both operating at 50% power, would receive alternating waveforms. In other words, microprocessor **213** delivers a wave form to the first heating element, and delivers the next wave form to the second heating, and so forth. The alternating pattern creates a smooth overall power usage profile, as seen in **1206.**

The waveform of **1207** represents 75% overall power usage, which may occur when one heating element is drawing 100% power and the second is drawing 50% power, or vice versa. As seen in **1207,** waves having full amplitude and half amplitude are alternating, which provides a combined 75% power delivery. Lastly, the waveform of **1208** shows an overall 100% power usage, which occurs when both heating elements are operating at 100%. The waveform of **1208** has double the amplitude of the 50% power delivery in **1206.**

Embodiments of the disclosed digital power supply and method for delivering power may optionally be implemented in the circuitry of an electric grill. Figure 2A shows additional components that may optionally be added to the protection circuitry **200** to provide circuitry for an electric grill. For example, line **201** and neutral **202** may connect to a step down transformer **215** to which zero crossing detection unit **210** is connected. Step down transformer **215** provides a reduced secondary voltage so that zero crossing detection unit **210** may detect zero crossings in AC current between line **201** and neutral **202** without being exposed to high voltages.

Further optional embodiments include a full wave rectifier **216** that feeds to a ground fault detection unit **217,** which in turn communicates with a trip controller **218** for tripping an electromechanical latch **206** or **207** (see Figure 2A). Ground fault detection unit **217** may receive a signal indicating a current imbalance between line **201** and neutral **202** and cause the latches to trip to prevent hazardous current situations.

Additional optional embodiments include a watchdog monitor **220** which monitors the operation of microprocessor **213** and may disable triac drivers **211** and **212** in the event of a failure of microprocessor **213**. Also provided are AC/DC power converters **214** which may be used to power the microprocessor **213**, and a current sensor, such as Hall Effect sensor **219**, which may be used by microprocessor **213** to monitor the current flowing to heating elements **203** and **204.**

Figure 2B further discloses relays **225** and **226**, which are configured in parallel with TriACs **208** and **209,** respectively. Relays **225** and **226** are controlled via control line (not shown) by microprocessor **213** for controlling the delivery of current to heating elements **203** and **204**, respectively. Because of the parallel configuration between relays **225**, **226** and TriACs **208**, **209**, current can be delivered to the heating elements **203, 204** by activating either a relay or a TriAC. Stated another way, microprocessor **213** can use either the respective TriAC **208, 209** or the respective relay **225**, **226** to deliver current to heating elements **203**, **204**.

An advantage of having two components (a relay and a TriAC) which can each deliver current to the heating elements **203, 204,** is that microprocessor **213** can alternate between the two components to reduce heat generation. For example, delivering 100% power to heating elements **203, 204** may cause TriACs **208, 209** to overheat when active. More specifically, heating elements **203, 204** may draw a relatively high amount of current when a high temperature is desired, and delivering said current through TriACs **208, 209** for a prolonged period of time may cause TriACs **208, 209** to overheat and eventually deteriorate. To avoid this, microprocessor **213** may deactivate TriACs **208, 209** and instead activate relays **225**, **226** when delivering a "HIGH," or relatively high, current to heating elements **203, 204.** Current then flows to heating elements **203** and/or **204** through relays **225** and/or **226**, respectively, thereby protecting TriACs **208, 209** from overheating.

In an embodiment where the disclosed digital power supplies are used in an electric grill, it may be desirable to achieve and maintain a desired target temperature. A band controller **223**, seen in Figures 2A-B, may be provided for achieving and maintaining a desired target temperature. Figures 2A-B further show an embodiment of microprocessor **213** having the functionality of band controller **223**. A person of skill in the art, having the benefit of this disclosure, will understand that band controller **223** may be a physical and/or virtual subcomponent of microprocessor **213**, or may alternatively be a separate hardware and/or software component. In embodiments of the inventions, band controller **223** may be configured to receive a target temperature via a user input, and to control the amount of power (i.e. current) delivered to heating elements **203, 204** to achieve the user-selected target temperature.

Band controller **223** may use hardware and software applications to achieve and maintain target temperatures at heating elements **203, 204** by controlling the amount of current delivered. Band controller **223** may receive feedback from thermocouples **221**, **222**, which may be positioned proximate to heating elements **203, 204,** and use such feedback to determine when a target temperature has been achieved. In embodiments of the inventions, it may be desirable to estimate the ambient temperature within a grill's cook box using thermocouples **221**, **222**. There are scenarios in which the ambient temperature (e.g. the temperature at a position of six or eight inches above the heating elements) may not be identical to the temperature at heating elements **203, 204,** especially when operating at higher temperatures. Because food may be positioned throughout a grill's cook box, for example on a grate six or eight inches above heating elements **203, 204,** it may be desirable for band controller **223** (and/or microprocessor **213**) to operate based on an estimated ambient temperature, rather than the temperature at heating elements **203, 204.** Operating based on the ambient temperature provides a more precise measurement of a food's temperature, and therefore a more precise measurement of a food's doneness.

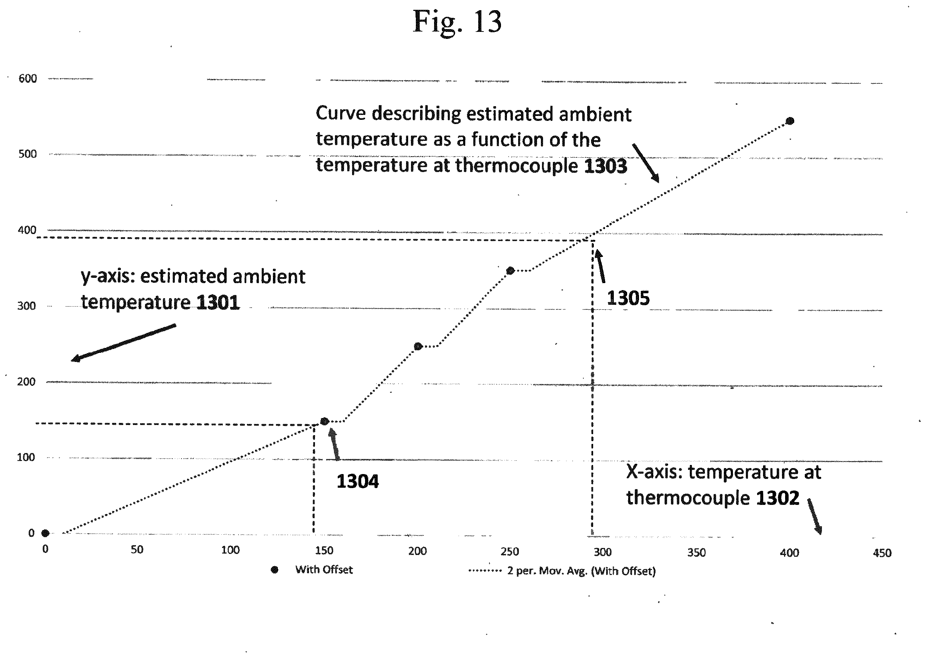

By way of example, Figure 13 shows Applicants' test data for accurately estimating the ambient temperature **1301**, based on the temperature **1302** at thermocouples **121**, **122.** On its x-axis, Figure 13 shows a temperature **1302** measured at thermocouples **121**, **122.** On its y-axis, Figure 13 shows a corresponding estimated ambient temperature **1301.** The curve **1303** shows the estimated ambient temperature (y-axis) as a function of the measured temperature (x-axis). The estimated ambient temperature of Figure 13 was measured a few inches above a heating element, at a position where a user may configure a cooking grate. It becomes clear that, at higher temperatures, the ambient temperature diverges from the measured temperature at the thermocouples - in other words, at higher temperatures, the estimated ambient temperature at a position above a heating element rises faster than the temperature of the heating element. By way of example, at reference point **1304**, the estimated ambient temperature and the temperature at the thermocouples **1302** are both roughly equal, at 339K (150F). At a higher temperature (e.g. reference point **1305**), the temperature at the thermocouple may be 338K (300F), whereas the estimated ambient temperature has risen to approximately 478K (400F). Thus, at higher temperatures, a higher offset is required in order to accurately estimate the ambient temperature.

Using the offsets indicated by Figure 13, microprocessor **213**, and/or band controller **223**, may be adapted and configured with hardware and/or software to calculate an estimated ambient temperature based on a measured temperature at thermocouples **221**, **222**. It should be understood that the offsets of Figure 13 are provided as an example only, and may be increased or decreased depending on factors such as the height of a cooking grate, and other factors which may affect ambient conditions. Moreover, microprocessor **213** and/or band controller **223** may use such an estimated ambient temperature as part of a feedback loop to determine when a target temperature is reached. In other words, in some embodiments, a target temperature may refer to the estimated ambient temperature, and in other embodiments it may refer to the temperature at thermocouples **221, 222.**

It is contemplated that yet further embodiments may use a food probe (not shown) to measure a food's temperature and determine when a target temperature is reached based on a temperature reading from the food probe. A food probe is a temperature sensing device which may be inserted by a user into a food - such as a steak or a chicken breast - to measure the food's internal temperature. Using a food probe to sense temperature may be advantageous to some cooking styles because it can provide an accurate determination of a food's internal temperature, and by extension its doneness.

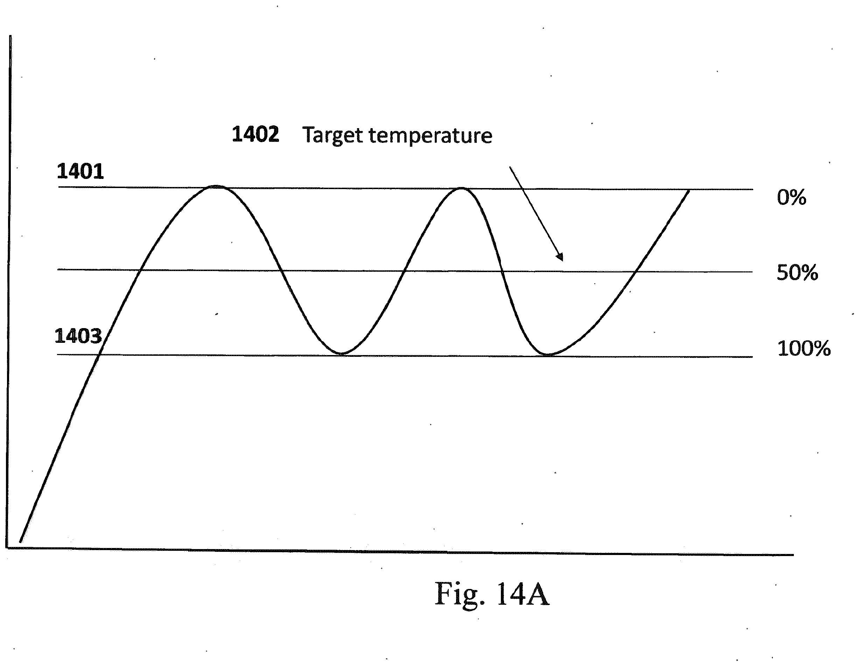

To consistently maintain a target temperature, band controller **223** may determine temperature "bands" surrounding a given target temperature, where said bands indicate the amount of power (i.e. current) to deliver to a heating element **203, 204** as a target temperature is approached. In embodiments of the inventions, the bands create zones representing 0%, 50%, and 100% power. The zone above **1401** represents a temperature zone in which 0% power is delivered; the zone between **1401** and **1403** represents a zone in which 50% power is delivered, and the zone below **1403** represents 100% power delivery. Band controller **223** uses the bands to determine an appropriate power (e.g. electric current) to deliver to a heating element to achieve and maintain the desired target temperature. By way of example, seen for example in Figure 14A, band controller **223** may deliver 100% power until a desired target temperature **1402** is achieved, and then reduce power to 50% until an upper band **1401** is reached. If the upper band **1401** is exceeded, band controller **223** reduces power to 0%. If the temperature drops to (or below) a lower band **1403**, power is again increased to 100%. Band controller **223** continuously receives feedback from thermocouples **221**, **222**, and compares the feedback (in some embodiments, the estimated ambient temperature described above) to appropriate temperature bands. In this way, temperature fluctuates between lower band **1403** and upper band **1401**, and approximates the target temperature.

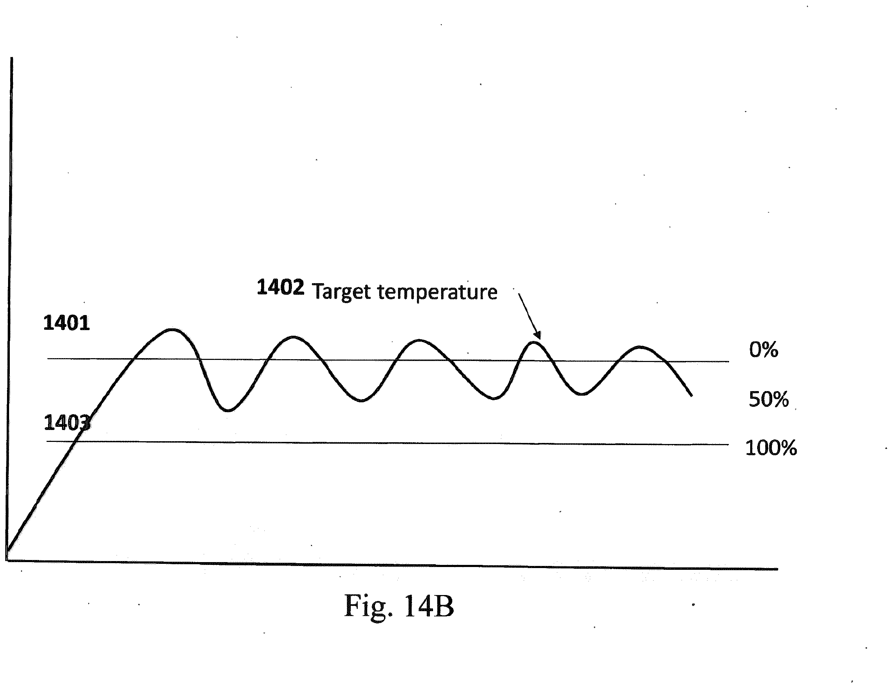

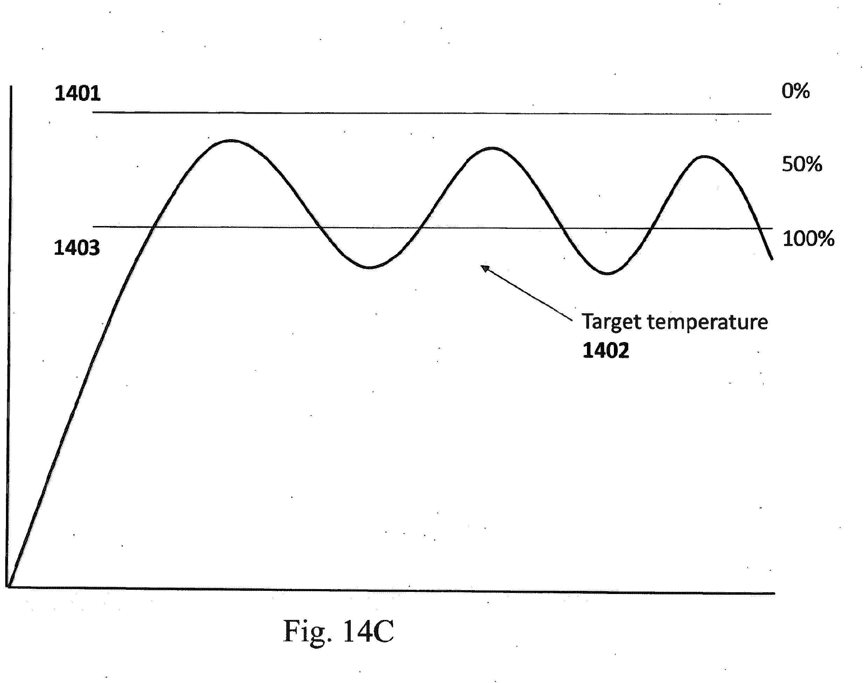

Moreover, in embodiments of the invention, band controller **223** dynamically shifts the bands depending on the desired target temperature. Dynamically shifting the temperature bands allows for more precise temperature control, allowing a user to approximately maintain the selected target temperature. This occurs because, at lower temperatures, a 50% power setting may cause the electric grill's temperature to continue increasing past the desired target temperature. On the other hand, at higher temperatures, delivering 50% power may cause the temperature to begin dropping. Therefore, band controller **223** may compensate by lowering the lower power band **1403** for a lower desired target temperature. On the other hand, at a higher temperature range, band controller **223** may shift the bands higher. An example of lowered temperature bands corresponding to a lower desired target temperature is shown in Figure 14B. In Figure 14B, a lower target temperature has been selected, and band controller **223** shifted the upper power band (**1401**) to correspond to the target temperature. Conversely, Figure 14C shows a relatively high target temperature, for which band controller **223** raised the power bands such that the target temperature coincides with the 100% power band (**1403**). In Figure 14B, the target temperature overlaps with the power band **1401**; whereas in Figure 14C the target temperature overlaps with the power band **1403.** Exemplary values for power bands are provided in the following table:

| Desired target temperature (T) | Lower temperature band (100%) | Upper temperature band (0%) |
|---|---|---|
| T < 394K (250F) | T 241K (-25F) | T |
| 394K (250F) < T < 478K (400F) | T 250K (-10F) | T+261K (+10F) |
| 478K (400F) < T | T | T+264K (+15F) |

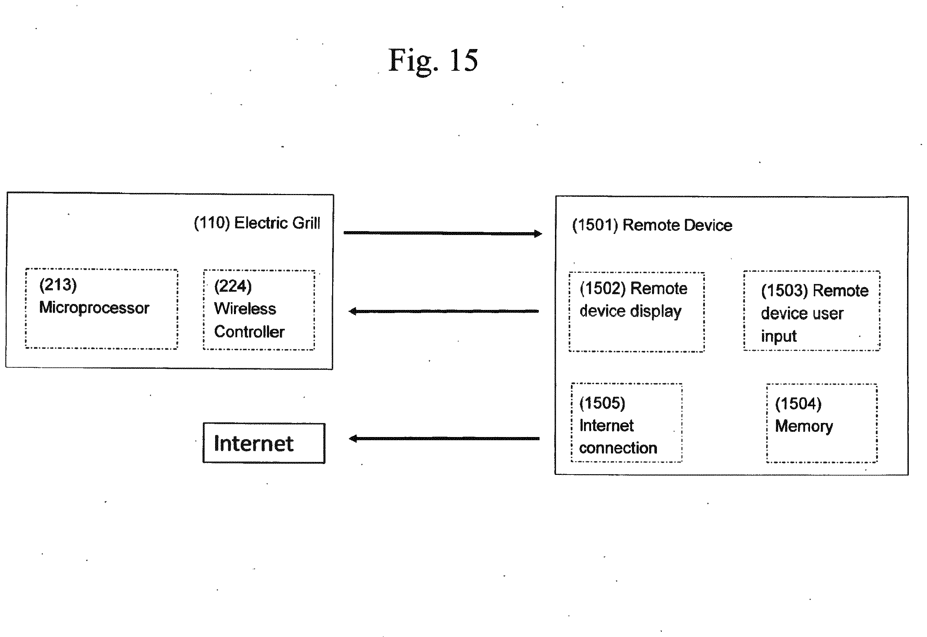

In embodiments having multiple heating elements capable of independent operation, users can input multiple target temperatures. For example, an embodiment having two independent heating elements **203, 204,** may receive two separate target temperatures, each corresponding to one heating element. Target temperatures may be communicated to band controller **223** through any number of possible user inputs. By way of non-limiting examples, possible user inputs include knobs **101, 102.** User inputs can also be received wirelessly, via wireless controller **224,** from a wireless device configured to communicate with wireless controller **224.** In such an embodiment, wireless controller **224** may be configured to wirelessly communicate with a remote device via Wi-Fi, Bluetooth, radio frequency, or any other form of wireless communication. Remote devices include cell phones, tablets, laptops, computers, and any other form of device capable of wireless communication. Figure 15 shows an exemplary remote device **1501,** having a display **1502** and user input device **1503,** communicating with the electric grill 110's wireless controller **224.** In a non-limiting example, remote device **1501** may be a cell phone with a touch screen as its input device **1503.** Regardless of the type of device used, it is contemplated that remote device **1501** may be configured to receive a user input representing one or more target temperatures, and wirelessly communicate said target temperature to electric grill **110** via wireless controller **224.**

In exemplary embodiments, remote device **1501** may be adapted and configured to directly receive a desired target temperature from a user. In such embodiments, a user can use input device **1503** to select a target temperature. In other exemplary embodiments, remote device **1501** may be adapted and configured to receive a user input selecting a type of meat to be cooked, and a desired doneness, and to determine the appropriate target temperature for the user's selection. In such embodiments, remote device **1501** may have a memory **1504** storing the appropriate target temperature associated with a desired food profile. A user thus uses input device **1503** to select a food profile, and remote device **1501** wirelessly communicates the associated target temperature. In addition to controlling target temperatures, embodiments of remote device **1501** are adapted and configured to send an "on" and/or "off" signal wirelessly, via wireless controller **224,** to microprocessor **213** and/or band controller **223.** As such, a user can control both the desired target temperature of the electric grill **110,** as well as turning it on and off.

Additional examples of wireless communication between remote device **1501** and electric grill **110** (via wireless controller **224**) include the ability to control settings for display **103** remotely, from remote device **1501.** Thus, remote device **1501** may be adapted and configured to wirelessly control the information displayed on electric grill 110's display **103.** Remote device **1501** may control which information is displayed on display **103,** and allow a user to toggle between (C) Celsius and (F) Fahrenheit with respect to temperature measurements. Such information may include the electric grill 110's current temperature, ambient temperature, target temperature, as well as timers indicating how long the grill has been active, how long a food has been cooking, or how much time remains until a food reaches its target temperature. Such information may further be wirelessly transmitted from electric grill **110,** via wireless controller **224,** to remote device **1501.**

In turn, remote device **1501** may provide such information to a user on a remote device display **1502,** and may further use said information to wirelessly turn electric grill **110** off, or reduce its desired target temperature, if a predetermined temperature has been reached, or if a food has been cooking for a predetermined time period. In exemplary embodiments, food profiles are stored in memory **1504,** where such food profiles indicate either the appropriate target temperature and/or an appropriate cooking time for a given food. Remote device **1501** may monitor information received wirelessly from electric grill **110** and determine if an appropriate temperature or cooking time has been reached. Remote device **1501** may also be adapted and configured to turn off electric grill **110** once that happens, and/or to provide an audible or visual alert. Such an audible and/or visual alert may be provided on the remote device **1501,** at the electric grill **110,** or both.

Moreover, it is contemplated that embodiments of the inventions may use wireless communications to deliver error codes from the electric grill **110** to a remote device **1501,** where said error codes may be indicative of an unsafe current condition as described further herein. Delivering error codes to a remote device **1501** has the advantage of allowing a user to remotely understand when an unsafe current condition has occurred, and remote device **1501** may further display safety tips for correcting the unsafe current condition as well as recording the conditions that lead to the unsafe condition.

Error codes may be determined by microprocessor **213** acting in conjunction with the circuitry shown for example in Figure 2. As described further herein, microprocessor **213** may be in communication, via control lines, with Ground Fault Detection Unit **217** and Hall Effect sensor **219.** Thus, microprocessor **213** may be adapted and configured to receive a control signal from Ground Fault Detection Unit **217** indicating that a ground fault has been detected. Likewise, microprocessor 213 may be adapted and configured to use signals from Hall Effect sensor **219** to recognize errors in delivering current to heating elements **203** and **204.** As described further herein, a reading of zero current from Hall Effect sensor **219** indicates that heating elements **203** and **204** are not receiving any current, whereas an unexpectedly high current reading indicates that too much current is flowing to heating elements **203** and **204** (e.g. an "over-current" scenario).

In embodiments of the inventions, microprocessor **213** is adapted and configured to recognize these errors and wirelessly communicate, via wireless controller **224,** an error code corresponding to the error which occurred. For example, an error code of "01" may indicate that a ground fault has been detected; "02" may indicate that Hall Effect sensor **219** has determined that no current is flowing to heating elements **203** and/or **204**; and "03" may indicate that Hall Effect sensor **219** detected an unexpectedly high current flowing to heating elements **203** and/or **204**. In embodiments where microprocessor **213** is a chip including a "self-check" feature, an error code of "04" may be sent if the self-check pin determines a failure of microprocessor **213**. A person of ordinary skill in the art will recognize that any variety of codes may be used to indicate each error. In response to an error, an audible or visual alert may be signaled at electric grill **110**, including for example on display **103**. Likewise, remote device **1501** may also provide an audible or visual alert upon receiving an error code. Additional disclosure relating to the identification and transmission of error codes is found in Applicant's co-pending application 15/200,687, titled Electric Grill with Circuit Protection Circuitry, filed on 07/01/2016, and also the co-pending patent application entitled "Wireless Control And Monitoring For Electric Grill With Current Protection Circuitry," filed on the same day as this application, both of which are assigned to Weber-Stephen Products LLC.

Remote device **1501** may be adapted and configured to wirelessly receive error codes and display, on display **1502**, a message identifying the type of error to the user. Such an error message may be accompanied by an audible or visual alert at remote device **1501**. Remote device **1501** may further be adapted and configured to display a message, saved in memory **1504**, explaining steps that a user should take to correct the error. For example, as explained further herein, the circuitry of Figure 2 may be configured to trip a relay **206** and/or **207** in response to a ground fault. Therefore, if microprocessor **213** sends an error code (e.g. "01") indicating a ground fault to remote device **1501**, remote device **1501** may display a message alerting a user that a ground fault has occurred and prompting the user to reset relay **206** and/or **207**.

In response to an error "02," remote device **1501** may be adapted and configured to alert the user that no current is flowing to heating element **203** and/or **204.** The absence of current flowing may be indicative of an open circuit, which may occur, for example, if a heating element **203, 204** is not properly installed. Thus, remote device **1501** may display a message prompting a user to uninstall, and re-install, heating elements **203, 204.** If the error persists, remote device **1501** may prompt the user to contact the manufacturer.

Similarly, if error code "03" is received, an over-current has occurred. One possible cause of an over-current may be that a user has installed an incompatible, or faulty, heating element having an incorrect resistance value. (A heating element with an incorrectly low resistance will cause an inappropriately high current to flow through it). For example, a heating element designed to work at 120V would have a resistance value that is too low to function at 230V, causing an overcurrent. Thus, a user may be prompted to check the heating element, or replace it with a new one.

Remote device **1501** may create a log of errors and store them in memory **904**. Such an error log may include a recording of each error that occurred. Moreover, in embodiments where remote device **1501** receives status information (such as the temperature of heating elements, ambient temperature, temperature targets, cooking time, etc.) from electric grill **510**, such status information may also be recorded in the error log. Status information may be delivered continuously, or in response to an error. By way of example, it may be advantageous to know how long a grill had been cooking before an error occurred, the grill's temperature at the time of an error, and other related information. An error log may be helpful in diagnosing errors. A person of skill in the art will understand that a wide variety of parameters may be recorded and stored as part of an error log.

In some embodiments, remote device **1501** may have an internet connection **1505**. Internet connection **1505** allows remote device **1501** to optionally send a recorded error log to a third party, such as an electric grill's manufacturer. A manufacturer can therefore better understand the error that occurred and the conditions surrounding the error. This can lead to product fixes and improvements.

For the reasons described above, some embodiments of the inventions may provide a digital power supply that increases a heating element's lifespan; complies with flicker requirements, and also complies with harmonic requirements. These benefits may be accomplished using the devices and methods described herein. For example, using a power delivery phase of 2 seconds prevents the heating elements from ever fully expanding or fully contracting. Lengthy power delivery phases that allow a heating element to fully expand or contract are very detrimental to the heating element's lifespan. The flicker requirement is satisfied by creating a total power array that describes an alternating wave pattern which has a cycling frequency of 25-30Hz depending on the AC current. Moreover, the total power array that may be created using devices and methods of the invention follow every cut wave with a full "on" or full "off" wave, thus reducing harmonic currents. Harmonic currents are also reduced by splitting the combined load of electric grill **110** to two or more elements.

**Claims**

**1.** An electric grill having a digital power supply (200), the electric grill comprising:

a first load (203) connected through a first triac (208) to a voltage line (201);
a temperature sensing device (221) positioned proximate the first load (203) to determine a sensed temperature of the first load (203);

a user input device (101) for selecting a first target temperature of the first load (203), wherein the digital power supply (200) includes:

> a band controller (223) adapted and configured to receive the first target temperature, and to determine a temperature range defined by a lower temperature band and an upper temperature band, and wherein the temperature range is based on the first target temperature;
> a microprocessor (213) in electronic communication with the band controller (223), and further in electronic communication with the first triac (208), wherein the microprocessor (213) is configured to deliver discrete power levels to the first load by activating and deactivating the first triac (208), and
> wherein the microprocessor (213) is further adapted and configured to deliver a first discrete power level to the first load when the sensed temperature is below the lower temperature band, a second discrete power level when the sensed temperature is between the lower temperature band and the upper temperature band, and to deliver a third discrete power level when the sensed temperature is above the upper temperature band.

2. The electric grill of claim 1, wherein the digital power supply (200) further includes a wireless controller (224) in electronic communication with the microprocessor (213).

3. The electric grill of claim 2, wherein the microprocessor (213) of the digital power supply (200) is to receive at least one desired target temperature from a remote device (1501).

4. The electric grill of claim 3, wherein the microprocessor (213) of the digital power supply (200) is adapted and configured to use a wireless controller (224) to establish a wireless connection with the remote device (1501); and is to receive a desired target temperature wirelessly, via the wireless controller (224), from the remote device (1501).

5. The electric grill of claim 3, wherein the microprocessor (213) of the digital power supply (200) is to receive a desired target temperature via a user input device (101) in electronic communication with the microprocessor (213), and wherein the user input device is a control knob.

6. The electric grill of claim 3, wherein the microprocessor (213) of the digital power supply (200) is to receive a first desired target temperature corresponding to the first load (203) and a second desired target temperature corresponding to a second load (204) of the electric grill.

7. The electric grill of claim 3, further including a second temperature sensing device (222) in electronic communication with the microprocessor (213) of the digital power supply (200).

8. The electric grill of claim 7, wherein a first temperature sensing device (221) is positioned proximate to the first load (203) and a second temperature sensing device (222) is positioned proximate to the second load (204).

9. The electric grill of claim 8, wherein the discrete power levels are 0%, 50%, and 100%.

10. The electric grill of claim 9, wherein the microprocessor (213) of the digital power supply (200) is configured to simultaneously deliver 100% power to the first load (203) until the first desired target temperature is reached and 100% power to the second load (204) until the second desired target temperature is reached.

11. The electric grill of claim 1, wherein the first discrete power level, delivered when the sensed temperature is below the lower temperature band, is 100%; the second discrete power level, delivered when the sensed temperature is between the lower temperature band and the upper temperature band, is 50%; and the third discrete power level, delivered when the sensed temperature is above the upper temperature band, is 0%.

12. The electric grill of claim 1, wherein the microprocessor (213) of the digital power supply (200) is adapted and configured to continuously monitor the sensed temperature from the temperature sensing device (221), and wherein the microprocessor (213) of the digital power supply (200) is further adapted and configured to deliver 100% power to the first load when the sensed temperature is below the lower temperature band.

13. The electric grill of claim 1, wherein the microprocessor (213) of the digital power supply (200) is adapted and configured to continuously monitor the sensed temperature from the temperature sensing device (221), and wherein the microprocessor (213) of the digital power supply (200) is further adapted and configured to deliver 50% power when the sensed temperature from the temperature sensing device is between the lower temperature band and the upper temperature band.

14. The electric grill of claim 1, wherein the microprocessor (213) of the digital power supply (200) is adapted and configured to continuously monitor the sensed temperature from the temperature sensing device (221), and wherein the microprocessor (213) of the digital power supply (200) is further adapted and configured to deliver 0% power when the sensed temperature is above the upper temperature band.

15. The electric grill of claim 1, wherein the band controller (223) of the digital power supply (200) is adapted and configured to dynamically lower the temperature bands for a lower target temperature and raise the temperature bands for a higher target temperature.

**Patentansprüche**

1. Elektrogrill mit einer digitalen Stromversorgung (200), wobei der Elektrogrill umfasst:

    einen ersten Verbraucher (203), der durch einen ersten Triac (208) mit einer Spannungsleitung (201) verbunden ist;
    eine Temperatursensorvorrichtung (221), die benachbart dem ersten Verbraucher (203) positioniert ist, um eine erfasste Temperatur des ersten Verbrauchers (203) zu bestimmen;
    ein Benutzereingabevorrichtung (101) zum Auswählen einer ersten Solltemperatur des ersten Verbrauchers (203), wobei die digitale Stromversorgung (200) beinhaltet:

       eine Bandsteuereinheit (223), die angepasst und konfiguriert ist, die erste Solltemperatur zu empfangen und einen Temperaturbereich zu bestimmen, der durch ein unteres Temperaturband und ein oberes Temperaturband definiert ist, und wobei der Temperaturbereich auf der ersten Solltemperatur basiert;
       einen Mikroprozessor (213) in elektronischer Verbindung mit der Bandsteuereinheit (223) und ferner in elektronischer Verbindung mit dem ersten Triac (208), wobei der Mikroprozessor (213) konfiguriert ist, dem ersten Verbraucher diskrete Leistungspegel durch Aktivieren und Deaktivieren des ersten Triac (208) zu liefern, und
       wobei der Mikroprozessor (213) ferner angepasst und konfiguriert ist, dem ersten Verbraucher einen ersten diskreten Leistungspegel zu liefern, wenn die erfasste Temperatur unterhalb des unteren Temperaturbands liegt, einen zweiten diskreten Leistungspegel, wenn die erfasste Temperatur zwischen dem unteren Temperaturband und dem oberen Temperaturband liegt, und einen dritten diskreten Leistungspegel zu liefern, wenn die erfasste Temperatur oberhalb des oberen Temperaturbands liegt.

2. Elektrogrill nach Anspruch 1, wobei die digitale Stromversorgung (200) ferner eine Drahtlossteuereinheit (224) in elektronischer Verbindung mit dem Mikroprozessor (213) beinhaltet.

3. Elektrogrill nach Anspruch 2, wobei der Mikroprozessor (213) der digitalen Stromversorgung (200) mindestens eine gewünschte Solltemperatur von einer Fernvorrichtung (1501) empfangen soll.

4. Elektrogrill nach Anspruch 3, wobei der Mikroprozessor (213) der digitalen Stromversorgung (200) angepasst und konfiguriert ist, eine Drahtlossteuereinheit (224) zu verwenden, um eine Drahtlosverbindung mit der Fernvorrichtung (1501) herzustellen; und eine gewünschte Solltemperatur drahtlos, über die Drahtlossteuereinheit (224), von der Fernvorrichtung (1501) empfangen soll.

5. Elektrogrill nach Anspruch 3, wobei der Mikroprozessor (213) der digitalen Stromversorgung (200) eine gewünschte Solltemperatur über ein Benutzereingabevorrichtung (101) in elektronischer Verbindung mit dem Mikroprozessor (213) empfangen soll, und wobei die Benutzereingabevorrichtung ein Drehknopf ist.

6. Elektrogrill nach Anspruch 3, wobei der Mikroprozessor (213) der digitalen Stromversorgung (200) eine erste gewünschte Solltemperatur, die dem ersten Verbraucher (203) entspricht, und eine zweite gewünschte Solltemperatur, die einem zweiten Verbraucher (204) des Elektrogrills entspricht, empfangen soll.

7. Elektrogrill nach Anspruch 3, ferner beinhaltet eine zweite Temperatursensorvorrichtung (222) in elektronischer Verbindung mit dem Mikroprozessor (213) der digitalen Stromversorgung (200) .

8. Elektrogrill nach Anspruch 7, wobei eine erste Temperatursensorvorrichtung (221) benachbart zu dem ersten Verbraucher (203) positioniert ist und eine zweite Temperatursensorvorrichtung (222) benachbart zu dem zweiten Verbraucher (204) positioniert ist.

9. Elektrogrill nach Anspruch 8, wobei die diskreten Leistungspegel 0 %, 50 % und 100 % sind.

10. Elektrogrill nach Anspruch 9, wobei der Mikroprozessor (213) der digitalen Stromversorgung (200) konfiguriert ist, dem ersten Verbraucher (203) gleichzeitig 100 % Leistung zu liefern, bis die erste gewünschte Solltemperatur erreicht ist, und dem zweiten Verbraucher (204) 100 % Leistung zu liefern, bis die zweite gewünschte Solltemperatur erreicht ist.

11. Elektrogrill nach Anspruch 1, wobei der erste diskrete Leistungspegel, der geliefert wird, wenn die erfasste Temperatur unterhalb des unteren Temperaturbands liegt, 100 % beträgt; der zweite diskrete Leistungspegel, der geliefert wird, wenn die erfasste Temperatur zwischen dem unteren Temperaturband und dem oberen Temperaturband liegt, 50 % beträgt; und der dritte diskrete Leistungspegel, der geliefert wird, wenn die erfasste Temperatur oberhalb des oberen Temperaturbands liegt, 0 % beträgt.

12. Elektrogrill nach Anspruch 1, wobei der Mikroprozessor (213) der digitalen Stromversorgung (200) angepasst und konfiguriert ist, die erfasste Temperatur von der Temperatursensorvorrichtung (221) kontinuierlich zu überwachen, und wobei der Mikroprozessor (213) der digitalen Stromversorgung (200) ferner angepasst und konfiguriert ist, dem ersten Verbraucher 100 % Leistung zu liefern, wenn die erfasste Temperatur unterhalb des unteren Temperaturbands liegt.

13. Elektrogrill nach Anspruch 1, wobei der Mikroprozessor (213) der digitalen Stromversorgung (200) angepasst und konfiguriert ist, die erfasste Temperatur von der Temperatursensorvorrichtung (221) kontinuierlich zu überwachen, und wobei der Mikroprozessor (213) der digitalen Stromversorgung (200) ferner angepasst und konfiguriert ist, 50 % Leistung zu liefern, wenn die erfasste Temperatur von der Temperatursensorvorrichtung zwischen dem unteren Temperaturband und dem oberen Temperaturband liegt.

14. Elektrogrill nach Anspruch 1, wobei der Mikroprozessor (213) der digitalen Stromversorgung (200) angepasst und konfiguriert ist, die erfasste Temperatur von der Temperatursensorvorrichtung (221) kontinuierlich zu überwachen, und wobei der Mikroprozessor (213) der digitalen Stromversorgung (200) ferner angepasst und konfiguriert ist, 0 % Leistung zu liefern, wenn die erfasste Temperatur oberhalb des oberen Temperaturbands liegt.

15. Elektrogrill nach Anspruch 1, wobei die Bandsteuereinheit (223) der digitalen Stromversorgung (200) angepasst und konfiguriert ist, die Temperaturbänder für eine niedrigere Solltemperatur dynamisch abzusenken und die Temperaturbänder für eine höhere Solltemperatur anzuheben.

**Revendications**

1. Gril électrique ayant une alimentation de puissance numérique (200), le gril électrique comprenant :

   une première charge (203) connectée par l'intermédiaire d'un premier triac (208) à une ligne de tension (201) ;
   un dispositif de détection de température (221) positionné à proximité de la première charge (203) pour déterminer une température détectée de la première charge (203) ;
   un dispositif d'entrée utilisateur (101) destiné à sélectionner une première température cible de la première charge (203), dans lequel l'alimentation de puissance numérique (200) comporte :

      un dispositif de commande de bande (223) adapté et configuré pour recevoir la première température cible, et pour déterminer une plage de température définie par une bande de température inférieure et une bande de température supérieure, et dans lequel la plage de température est basée sur la première température cible ;
      un microprocesseur (213) en communication électronique avec le dispositif de commande de bande (223), et en outre en communication électronique avec le premier triac (208), dans lequel le microprocesseur (213) est configuré pour fournir des niveaux de puissance discrets à la première charge en activant et en désactivant le premier triac (208), et
      dans lequel le microprocesseur (213) est en outre adapté et configuré pour fournir un premier niveau de puissance discret à la première charge lorsque la température détectée est inférieure à la bande de température inférieure, un deuxième niveau de puissance discret lorsque la température détectée se situe entre la bande de température inférieure et la bande de température supérieure, et pour fournir un troisième niveau de puissance discret lorsque la température détectée est supérieure à la bande de température supérieure.

2. Gril électrique selon la revendication 1, dans lequel l'alimentation de puissance numérique (200) comporte en outre un dispositif de commande sans fil (224) en communication électronique avec le microprocesseur (213).

3. Gril électrique selon la revendication 2, dans lequel le microprocesseur (213) de l'alimentation de puissance numérique (200) doit recevoir au moins une température cible souhaitée à partir d'un dispositif distant (1501).

4. Gril électrique selon la revendication 3, dans lequel le microprocesseur (213) de l'alimentation de puissance numérique (200) est adapté et configuré pour utiliser un dispositif de commande sans fil (224) pour établir une connexion sans fil avec le dispositif distant (1501) ; et doit recevoir une température cible souhaitée sans fil, via le dispositif de commande sans fil (224), à partir du dispositif distant (1501).

5. Gril électrique selon la revendication 3, dans lequel le microprocesseur (213) de l'alimentation de puissance numérique (200) doit recevoir une température cible souhaitée via un dispositif d'entrée utilisateur (101) en communication électronique avec le microprocesseur (213), et dans lequel le dispositif d'entrée utilisateur est un bouton de commande.

6. Gril électrique selon la revendication 3, dans lequel le microprocesseur (213) de l'alimentation de puissance numérique (200) doit recevoir une première température cible souhaitée correspondant à la première charge (203) et une seconde température cible souhaitée correspondant à une seconde charge (204) du gril électrique.

7. Gril électrique selon la revendication 3, comportant en outre un second dispositif de détection de température (222) en communication électronique avec le microprocesseur (213) de l'alimentation de puissance numérique (200).

8. Gril électrique selon la revendication 7, dans lequel un premier dispositif de détection de température (221) est positionné à proximité de la première charge (203) et un second dispositif de détection de température (222) est positionné à proximité de la seconde charge (204).

9. Gril électrique selon la revendication 8, dans lequel les niveaux de puissance discrets sont 0 %, 50 %, et 100 %.

10. Gril électrique selon la revendication 9, dans lequel le microprocesseur (213) de l'alimentation de puissance numérique (200) est configuré pour fournir simultanément 100 % de puissance à la première charge (203) jusqu'à ce que la première température cible souhaitée soit atteinte et 100 % de puissance à la seconde charge (204) jusqu'à ce que la seconde température cible souhaitée soit atteinte.

11. Gril électrique selon la revendication 1, dans lequel le premier niveau de puissance discret, délivré lorsque la température détectée est inférieure à la plage de température inférieure, est de 100 % ; le deuxième niveau de puissance discret, délivré lorsque la température détectée se situe entre la plage de température inférieure et la plage de température supérieure, est de 50 % ; et le troisième niveau de puissance discret, délivré lorsque la température détectée est supérieure à la plage de température supérieure, est de 0 %.

12. Gril électrique selon la revendication 1, dans lequel le microprocesseur (213) de l'alimentation de puissance numérique (200) est adapté et configuré pour surveiller en permanence la température détectée par le dispositif de détection de température (221), et dans lequel le microprocesseur (213) de l'alimentation de puissance numérique (200) est en outre adapté et configuré pour fournir 100 % de puissance à la première charge lorsque la température détectée est inférieure à la bande de température inférieure.

13. Gril électrique selon la revendication 1, dans lequel le microprocesseur (213) de l'alimentation de puissance numérique (200) est adapté et configuré pour surveiller en permanence la température détectée par le dispositif de détection de température (221), et dans lequel le microprocesseur (213) de l'alimentation de puissance numérique (200) est en outre adapté et configuré pour fournir 50 % de puissance lorsque la température détectée à partir du dispositif de détection de température se situe entre la bande de température inférieure détectée et la bande de température supérieure.

**14.** Gril électrique selon la revendication 1, dans lequel le microprocesseur (213) de l'alimentation de puissance numérique (200) est adapté et configuré pour surveiller en permanence la température détectée par le dispositif de détection de température (221), et dans lequel le microprocesseur (213) de l'alimentation de puissance numérique (200) est en outre adapté et configuré pour fournir 0 % de puissance lorsque la température détectée est supérieure à la bande de température supérieure.

**15.** Gril électrique selon la revendication 1, dans lequel le dispositif de commande de bande (223) de l'alimentation de puissance numérique (200) est adapté et configuré pour abaisser dynamiquement les bandes de température pour une température cible plus basse et augmenter les bandes de température pour une température cible plus élevée.

Fig. 1A

EP 3 399 836 B1

Fig. 1B

Fig. 2A

EP 3 399 836 B1

24

Fig. 2B

FIG. 3A

FIG. 3B

FIG. 4A

EP 3 399 836 B1

FIG. 4B

EP 3 399 836 B1

0 °      90 °      180 °      270 °    360 °/0 °    90 °      180 °      270 °      360 °

FIG. 4C

EP 3 399 836 B1

FIG. 5A

EP 3 399 836 B1

FIG. 5B

EP 3 399 836 B1

503

504

505

507

508

509

510

0°   90°   180°   270°   360°/0°   90°   180°   270°   360°

FIG. 5C

EP 3 399 836 B1

# FIG. 6

EP 3 399 836 B1

## FIG. 7

(701) Total Power

(702) Multiply Total Power * 8 = [702]

(703) Fill result into power array's first cell:

(704) If: $0 \leq [702] \leq 2.0$:

| ([702]) / 2 | 0 | ([702]) / 2 | 0 |
|---|---|---|---|

(705) If: $2.0 < [702] \leq 4.0$:

| 1 | $\frac{([702]-2)}{2}$ | 1 | $\frac{([702]-2)}{2}$ |
|---|---|---|---|

(706) If: $4.0 < [702] \leq 6.0$:

| ([702]-4) /2 | 0 | ([702]-4)/2 | 0 |
|---|---|---|---|

(707) If: $6.0 < [702] \leq 8.0$:

| 1 | ([702]-6)/2 | 1 | ([702]-6)/2 |
|---|---|---|---|

# FIG. 8

|← ——— 2 seconds ——— →|

First Triac
and First Heater

| T1 | T2 |
|---|---|
| Power Array 1 | Power Array 2 |

Second Triac
and Second Heater

| T1 | T2 |
|---|---|
| Power Array 2 | Power Array 1 |

EP 3 399 836 B1

## FIG. 9

First Triac
and First Heater

| T1 | T2 | (...) | T(n-1) | T(n) |

Power
array 1

Power
array 2

Power
array (n-1)

Power
array (n)

Second Triac
and Second Heater

| T1 | T2 | (...) | T(n-1) | T(n) |

Power
array 2

Power
array (n-1)

Power
array (n)

Power
array 1

(n-1)th Triac
and (n-1)th Heater

| T1 | T2 | (...) | T(n-1) | T(n) |

Power
array (n-1)

Power
array (n)

Power
array 1

Power
array 2

n-th Triac
and n-th Heater

| T1 | T2 | (...) | T(n-1) | T(n) |

Power
array (n)

Power
array 1

Power
array 2

Power
array (n-1)

2 seconds

EP 3 399 836 B1

Fig. 10

EP 3 399 836 B1

## FIG. 11

NOTE 1   1 200 voltage changes per minute give a 10 Hz flicker.

EP 3 399 836 B1

# FIG. 12

First load (e.g. first heating element)

Second load (e.g. second heating element)

0%      50%      100%

1201      1202      1203

Combined power usage:

0%      25%      50%      75%      100%

1204      1205      1206      1207      1208

EP 3 399 836 B1

# Fig. 13

Curve describing estimated ambient temperature as a function of the temperature at thermocouple **1303**

y-axis: estimated ambient temperature **1301**

**1305**

**1304**

X-axis: temperature at thermocouple **1302**

● With Offset         ·········· 2 per. Mov. Avg. (With Offset)

EP 3 399 836 B1

Fig. 14A

Fig. 14B

Fig. 14C

1401    0%

50%

1403    100%

Target temperature
1402

EP 3 399 836 B1

# Fig. 15

(110) Electric Grill

(213)
Microprocessor

(224)
Wireless
Controller

(1501) Remote Device

(1502) Remote
device display

(1503) Remote
device user
input

(1505)
Internet
connection

(1504)
Memory

Internet

EP 3 399 836 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6772475 B
- US 6111230 A
- US 2009167085 A, Foneca Julia
- GB 2067458 A

- EP 2067857 A
- US 2016196739 A, Naber Christopher Nils
- WO 15200687 A
- WO 07012016 A